# EUROPÄISCHE PATENTANMELDUNG

(11) **EP 3 184 499 A1**
(43) Veröffentlichungstag der Anmeldung: **28.06.2017**
(21) Anmeldenummer: 15201471.8
(22) Anmeldetag: 21.12.2015
(51) Int. Cl.: C04B 28/26, C08F 220/20, C09J 133/00

(54) **REAKTIONSHARZ-ZUSAMMENSETZUNG, MEHRKOMPONENTEN-SYSTEM UND DEREN VERWENDUNG**

(71) Anmelder: HILTI Aktiengesellschaft, 9494 Schaan (LI)
(72) Erfinder: Pfeil, Armin, 86916 Kaufering (DE); Gallef, Mickael, 52372 Kreuzau-Drove (DE); Jiminez, Angel. J., 81927 München (DE)
(74) Vertreter: Hilti Aktiengesellschaft Corporate Intellectual Property

(57) **Zusammenfassung**

Es wird eine Reaktionsharz-Zusammensetzung mit einer radikalisch polymerisierbare Verbindung, einem Initiatorsystem, das einen α-Halogencarbonsäureester und ein Katalysatorsystem, welches ein Kupfer(II)salz, ein Reduktionsmittel und wenigstens einen Stickstoff-enthaltenden Liganden umfasst, mit einer hydraulisch abbindenden Verbindung und mit Wasser, ein diese Reaktionsharz-Zusammensetzung enthaltendes Zwei- oder Mehrkomponenten-System sowie deren Verwendungen für bauliche Zwecke beschrieben.

## Beschreibung

Die vorliegende Erfindung betrifft eine radikalisch härtbare Reaktionsharz-Zusammensetzung mit einem Harzbestandteil, einem Initiatorsystem, das einen Initiator und ein Katalysatorsystem, welches in der Lage ist, *in-situ* einen Übergangsmetallkomplex als Katalysator zu bilden, umfasst, und eine hydraulisch abbindende Verbindung sowie die Verwendung der Zusammensetzung zu baulichen Zwecken, insbesondere zur Verankerung von Verankerungselementen in Bohrlöchern.

Die Verwendung von Reaktionsharz-Zusammensetzungen auf der Basis von ungesättigten Polyesterharzen, Vinylesterharzen oder von Epoxidharzen als Klebe- und Haftmittel, ist seit langem bekannt. Es handelt sich dabei um Zweikomponentensysteme, wobei eine Komponente die Harzmischung und die andere Komponente das Härtungsmittel enthält. Andere, übliche Bestandteile wie Füllmittel, Beschleuniger, Stabilisatoren, Lösungsmittel einschließlich Reaktivlösungsmittel (Reaktivverdünner) können in der einen und/oder der anderen Komponente enthalten sein. Durch Vermischen der beiden Komponenten wird dann die Reaktion unter Bildung eines gehärteten Produktes in Gang gebracht.

Die Mörtelmassen, welche in der chemischen Befestigungstechnik Verwendung finden sollen, sind komplexe Systeme, an die besondere Anforderungen gestellt werden, wie beispielsweise die Viskosität der Mörtelmasse, die Aushärtung und Durchhärtung in einem relativ breiten Temperaturbereich, gewöhnlich -10°C bis +40°C, die Eigenfestigkeit der ausgehärteten Masse, Haftung auf unterschiedlichen Untergründen und Umgebungsbedingungen, Lastwerte, Kriechfestigkeit und dergleichen.

Grundsätzlich kommen in der chemischen Befestigungstechnik zwei Systeme zum Einsatz. Eines auf Basis radikalisch polymerisierbarer, ethylenisch ungesättigter Verbindungen, die in der Regel mit Peroxiden gehärtet werden, und eines auf Epoxid-Amin-Basis.

Organische, härtbare zweikomponentige Reaktionsharz-Zusammensetzungen auf der Grundlage von härtbaren Epoxidharzen und Aminhärtern werden als Klebstoffe, Spachtelmassen zur Rissverfüllung und unter anderem zur Befestigung von Konstruktionselementen, wie Ankerstangen, Betoneisen (Bewehrungseisen), Schrauben und dergleichen, in Bohrlöchern verwendet. Derartige Mörtelmassen sind beispielsweise aus der EP 1 475 412 A2, der DE 198 32 669 A1 und der DE 10 2004 008 464 A1 bekannt.

Ein Nachteil der bekannten Mörtelmassen auf Epoxidbasis liegt im Einsatz von oft erheblichen Mengen an ätzenden Aminen als Härter, wie Xylylendiamin (XDA), insbesondere das m-Xylylendiamin (mXDA; 1,3-Benzoldimethanamin), und/oder an aromatischen Alkoholverbindungen, wie freie Phenole, z.B. Bisphenol A, was ein Gesundheitsrisiko für den Anwender bedeuten kann. Diese Verbindungen sind in zum Teil recht erheblichen Mengen, d.h. bis zu 50% in den jeweiligen Komponenten von Mehrkomponenten-Mörtelmassen enthalten, so dass vielfach eine Kennzeichnungspflicht der Verpackung besteht, die zu einer geringeren Anwenderakzeptanz des Produkts führt. In den letzten Jahren wurden in einigen Ländern Grenzwerte eingeführt, bis zu welchem Gehalt beispielsweise mXDA oder Bisphenol A in den Produkten enthalten sein dürfen bzw. dann gekennzeichnet werden müssen oder überhaupt noch in Produkten enthalten sein dürfen.

Radikalisch härtbare Systeme, insbesondere bei Raumtemperatur härtbare Systeme benötigen sogenannte Radikalstarter, auch Initiatoren genannt, damit die radikalische Polymerisation ausgelöst werden kann. Im Bereich der chemischen Befestigungstechnik haben sich aufgrund ihrer Eigenschaften die in der Anmeldung DE 3226602 A1 beschriebene Härterzusammensetzung, umfassend Benzoylperoxid als Radikalstarter und eine aminischen Verbindung als Beschleuniger, und die in der Anmeldung EP 1586569 A1 beschriebene Härterzusammensetzung, umfassend einen Perester als Härter und eine Metallverbindung als Beschleuniger, durchgesetzt. Diese Härterzusammensetzungen erlauben auch bei sehr tiefen Temperaturen bis -30°C eine schnelle und recht vollständige Aushärtung. Darüber hinaus sind diese Systeme hinsichtlich der Mischungsverhältnisse von Harz und Härter robust. Somit sind sie für die Verwendung unter Baustellenbedingungen geeignet.

Nachteilig an diesen Härterzusammensetzungen jedoch ist, dass in beiden Fällen Peroxide als Radikalstarter verwendet werden müssen. Diese sind thermisch sensibel und reagieren sehr empfindlich auf Verunreinigungen. Dies führt zu erheblichen Einschränkungen bei der Formulierung von pastösen Härterkomponenten vor allem für Injektionsmörtel hinsichtlich Lagertemperaturen, Lagerstabilitäten und der Auswahl geeigneter Komponenten. Um den Einsatz von Peroxiden, wie Dibenzoylperoxid, Perestern und dergleichen, zu ermöglichen, werden zu deren Stabilisierung Phlegmatisierungsmittel, wie Phthalate oder Wasser, zugegeben. Diese wirken als Weichmacher und beeinträchtigen damit signifikant die mechanische Stärke der Harzmischungen.

Ferner sind diese bekannten Härterzusammensetzungen insofern nachteilig, als sie erhebliche Peroxidmengen enthalten müssen, was problematisch ist, weil peroxidhaltige Produkte ab einer Konzentration von 1 %, etwa für Dibenzoylperoxid, in einigen Ländern als sensibilisierend gekennzeichnet werden müssen. Ähnliches gilt auch für die aminischen Beschleuniger, die zum Teil ebenfalls kennzeichnungspflichtig sind.

Bisher sind nur wenige Versuche unternommen worden, peroxidfreie Systeme auf Basis radikalisch polymerisierbarer Verbindungen zu entwickeln. Aus der DE 10 2011 078 785 A1 ist eine peroxidfreie Härterzusammensetzung für radikalisch polymerisierbare Verbindungen bekannt, die eine 1,3-Dicarbonylverbindung als Härter und eine Manganverbindung als Beschleuniger enthält sowie deren Verwendung für Reaktionsharz-Zusammensetzungen auf Basis radikalisch härtbarer Verbindungen. Dieses System neigt jedoch dazu, unter bestimmten Bedingungen nicht ausreichend durchzuhärten, was zu einer verminderten Leistungsfähigkeit der ausgehärteten Masse insbesondere für die Anwendung als Dübelmasse führen kann, so dass hier zwar eine Anwendung für Dübelmassen im Allgemeinen möglich ist, jedoch nicht für solche Anwendungen, bei denen zuverlässig recht hohe Lastwerte erforderlich sind.

Bei den beiden beschriebenen Systemen ist ferner nachteilig, dass jeweils ein definiertes Verhältnis von Harzkomponente und Härterkomponente (im Folgenden auch kurz als Mischungsverhältnis bezeichnet) eingehalten werden muss, damit die Bindemittel vollständig aushärten und die geforderten Eigenschaften der ausgehärteten Massen erreichen können. Viele der bekannten Systeme sind wenig robust, was das Mischungsverhältnis anbelangt und reagieren teilweise recht empfindlich auf Mischungsschwankungen, was sich in den Eigenschaften der ausgehärteten Massen niederschlägt.

Eine andere Möglichkeit, eine radikalische Polymerisation ohne den Einsatz von Peroxiden zu initiieren, liefert das in der makromolekularen Synthesechemie häufig eingesetzte ATRP-Verfahren (= Atom Transfer Radical Polymerisation). Es wird angenommen, dass es sich hierbei um eine "lebende" radikalische Polymerisation handelt, ohne dass durch die Beschreibung des Mechanismus eine Beschränkung erfolgen soll. In diesen Verfahren wird eine Übergangsmetallverbindung mit einer Verbindung umgesetzt, welche eine übertragbare Atomgruppe aufweist. Hierbei wird die übertragbare Atomgruppe auf die Übergangsmetallverbindung transferiert, wodurch das Metall oxidiert wird. Bei dieser Reaktion bildet sich ein Radikal, das an ethylenisch ungesättigte Gruppen addiert. Die Übertragung der Atomgruppe auf die Übergangsmetallverbindung ist jedoch reversibel, so dass die Atomgruppe auf die wachsende Polymerkette rückübertragen wird, wodurch ein kontrolliertes Polymerisationssystem gebildet wird. Diese Reaktionsführung wird beispielsweise von J-S. Wang, et al., J. Am. Chem. Soc., vol. 117, p. 5614-5615 (1995), von Matyjaszewski, Macromolecules, vol. 28, p. 7901-7910 (1995) beschrieben. Darüber hinaus offenbaren die Veröffentlichungen WO 96/30421 A1, WO 97/47661 A1, WO 97/18247 A1, WO 98/40415 A1 und WO 99/10387 A1 Varianten der zuvor erläuterten ATRP.

Die ATRP war lange von wissenschaftlichem Interesse und wird im Wesentlichen dazu eingesetzt, die Eigenschaften von Polymeren gezielt zu steuern und an die gewünschten Anwendungen anzupassen. Hierzu zählen die Kontrolle der Teilchengröße, der Struktur, der Länge, des Gewichts und der Gewichtsverteilung von Polymeren. Dementsprechend kann der Aufbau des Polymers, das Molekulargewicht und die Molekulargewichtsverteilung gesteuert werden. Die ATRP erlangt dadurch zunehmend auch wirtschaftliches Interesse. So beschreiben die U.S. Patente Nr. 5,807,937 und 5,763,548 (Co)polymere, die mittels ATRP hergestellt wurden und die für eine Vielzahl an Anwendungen nützlich sind, wie Dispergiermittel und grenzflächenaktive Substanzen.

Bisher wurde das ATRP-Verfahren allerdings nicht dazu eingesetzt, eine Polymerisation vor Ort, etwa auf der Baustelle unter den dort herrschenden Bedingungen durchzuführen, wie es für bauliche Anwendung, z.B. Mörtel-, Klebe- und Dübelmassen erforderlich ist. Die Anforderungen, welche bei diesen Anwendungen an die polymerisierbaren Zusammensetzungen gestellt werden, nämlich Initiierung der Polymerisation im Temperaturbereich zwischen -10°C und +60°C, anorganisch gefüllte Zusammensetzungen, Einstellung einer Gelzeit mit anschließender schneller und möglichst vollständiger Polymerisation des Harzbestandteils, die Konfektionierung als Ein- oder Mehrkomponentensysteme und die sonstigen bekannten Anforderungen an die ausgehärtete Masse, werden bisher in der umfangreichen Literatur zur ATRP nicht berücksichtigt.

Der Erfindung liegt daher die Aufgabe zugrunde, eine Reaktionsharz-Zusammensetzung für Mörtelsysteme der eingangs beschriebenen Art bereitzustellen, welches die genannten Nachteile der bekannten Systeme nicht aufweist, welche insbesondere als Zweikomponentensystem konfektioniert werden kann, über Monate hinweg lagerstabil ist und bei den für Reaktionsharzmörtel üblichen Anwendungstemperaturen, d.h. zwischen -10°C und +60°C zuverlässig aushärtet, d.h. kalthärtend ist.

Aus der EP 2 824 155 A1 ist ein eine Reaktionsharz-Zusammensetzung mit einem Harzbestandteil, der eine radikalisch polymerisierbare Verbindung enthält, und einem Initiatorsystem bekannt, das einen α-Halogencarbonsäureester und ein Katalysatorsystem, welches ein Kupfer(I)salz und wenigstens einen Stickstoff-enthaltenden Liganden umfasst, enthält. Nachteilig an dieser Zusammensetzung ist, dass das für die *in-situ* Reduktion des Kupfer(II)salzes erforderliche Reduktionsmittel nur solche Reduktionsmittel verwendet werden können, die in dem verwendeten Reaktionsharz und ggf. den verwendeten Reaktivverdünnern löslich ist.

Hieraus ergibt sich die Aufgabe, eine Reaktionsharz-Zusammensetzung für Mörtelsysteme der eingangs beschriebenen Art bereitzustellen, welches die Verwendung weiterer Reduktionsmittel und damit einen höheren Freiheitsgrad für die Formulierung der Zusammensetzung zulässt, bereitzustellen, welche weder die Lagerstabilität beeinträchtigt noch die zuverlässige Aushärtung bei den für Reaktionsharzmörtel üblichen Anwendungstemperaturen, d.h. zwischen -10°C und +60°C stört.

Der Erfinder hat überraschend herausgefunden, dass diese Aufgabe gelöst werden kann, indem für die oben beschriebenen Reaktionsharz-Zusammensetzungen auf Basis radikalisch polymerisierbarer Verbindungen ein zwei- oder mehrkomponentiges anorganisch/organisches Hybridsystem mit ATRP-Initiatorsystemen als Radikalinitiator eingesetzt werden, wobei der Radikalinitiator und das Reduktionsmittel zumindest teilweise in Wasser gelöst oder emulgiert vorliegen und wobei als anorganischer Bestandteil eine hydraulisch abbindende Verbindung verwendet wird.

Zum besseren Verständnis der Erfindung werden zunächst die folgenden Erläuterungen der hierin verwendeten Terminologie als sinnvoll erachtet. Im Sinne der Erfindung bedeutet:
- *"kalthärtend",* dass die Polymerisation, hierin auch gleichbedeutend als *"Härtung"* bezeichnet, der beiden härtbaren Verbindungen bei Raumtemperatur ohne zusätzlichen Energieeintrag, etwa durch Wärmezufuhr, durch die in den Reaktionsharz-Zusammensetzungen enthaltenen Härtungsmitteln, gegebenenfalls in Anwesenheit von Beschleunigern, gestartet werden kann und auch eine für die geplanten Anwendungszwecke ausreichende Durchhärtung zeigen;
- *"reaktionsinhibierend getrennt",* dass eine Trennung zwischen Verbindungen bzw. Komponenten derart erreicht wird, dass eine Reaktion untereinander erst erfolgen kann, wenn die Verbindungen bzw. Komponenten etwa durch Mischen miteinander in Kontakt gebracht werden; eine reaktionsinhibierende Trennung ist auch durch eine (Mikro)verkapselung einer oder mehrerer Verbindungen bzw. Komponenten denkbar;
- *"Härtungsmittel"* Stoffe, welche die Polymerisation (das Härten) des Grundharzes bewirken;
- *"aliphatische Verbindung"* eine acyclische und cyclische, gesättigte oder ungesättigte Kohlenwasserstoffverbindung, die nicht aromatisch ist (PAC, 1995, 67, 1307; Glossary of class names of organic compounds and reactivity intermediates based on structure (IUPAC Recommendations 1995));
- *"Beschleuniger"* eine zur Beschleunigung der Polymerisationsreaktion (Härtung) fähige Verbindung, die dazu dient, die Bildung des Radikalstarters zu beschleunigen;
- *"Polymerisationsinhibitor",* hierin gleichbedeutend auch als *"Inhibitor"* bezeichnet, eine zur Inhibierung der Polymerisationsreaktion (Härtung) fähige Verbindung, die dazu dient, die Polymerisationsreaktion und damit ein unerwünschtes vorzeitiges Polymerisieren der radikalisch polymerisierbaren Verbindung während der Lagerung zu vermeiden (oftmals als Stabilisator bezeichnet) und die dazu dient, den Start der Polymerisationsreaktion unmittelbar nach der Zugabe des Härtungsmittels zu verzögern; um den Zweck der Lagerstabilität zu erreichen, wird der Inhibitor üblicherweise in so geringen Mengen eingesetzt, dass die Gelzeit nicht beeinflusst wird; um den Zeitpunkt des Starts der Polymerisationsreaktion zu beeinflussen, wird der Inhibitor üblicherweise in solchen Mengen eingesetzt, dass die Gelzeit beeinflusst wird;
- *"Reaktivverdünner"* flüssige oder niedrigviskose Monomere und Grundharze, welche andere Grundharze oder den Harzbestandteil verdünnen und dadurch die zu deren Applikation notwendige Viskosität verleihen, zur Reaktion mit dem Grundharz befähigte funktionelle Gruppen enthalten und bei der Polymerisation (Härtung) zum überwiegenden Teil Bestandteil des gehärteten Masse (Mörtel) werden.
- *"Gelzeit"* für ungesättigte Polyester- oder Vinyl-Harze, die gewöhnlich mit Peroxiden gehärtet werden, entspricht die Zeit der Härtungsphase des Harzes der Gelzeit, in der sich die Temperatur des Harzes von +25°C auf +35°C erhöht; dies entspricht in etwa dem Zeitraum, in dem sich die Fluidität oder Viskosität des Harzes noch in so einem Bereich befindet, dass das Reaktionsharz bzw. die Reaktionsharzmasse noch einfach ver- bzw. bearbeitet werden kann;
- *"Zweikomponentensystem"* ein System, das zwei voneinander getrennt gelagerte Komponenten, im Allgemeinen eine Harz- und eine Härterkomponente, umfasst, so dass eine Härtung der Harzkomponente erst nach dem Mischen der beiden Komponenten erfolgt;
- *"Mehrkomponentensystem"* ein System, das drei oder mehrere voneinander getrennt gelagerte Komponenten umfasst, so dass eine Härtung der Harzkomponente erst nach dem Mischen aller Komponenten erfolgt;
- *"(Meth)acryl...*/*...(meth)acryl...",* dass sowohl die "Methacryl.../...methacryl..."- als auch die "Acryl.../...acryl..."-Verbindungen umfasst sein sollen;
- *"hydraulisch abbindend",* dass eine Verbindung, das Bindemittel, mit Wasser abbindet und dadurch aushärtet;
- *"polykondensierbar",* dass anorganische Verbindungen auch anders als mit Wasser abbindend polymere Strukturen bilden und dadurch aushärten.

Der Erfinder hat herausgefunden, dass sich unter den für bauliche Anwendungen vorherrschenden Reaktionsbedingungen radikalisch polymerisierbare Verbindungen mit einer Kombination aus bestimmten Verbindungen, wie sie für die Initiierung der ATRP Verwendung finden, polymerisieren lassen. Damit ist es möglich, eine Reaktionsharz-Zusammensetzung bereitzustellen, die kalthärtend ist, die die an Reaktionsharz-Zusammensetzungen für die Verwendung als Mörtel-, Klebe- oder Dübelmassen gestellten Anforderungen erfüllt und die insbesondere als Zwei- oder Mehrkomponentensystem konfektioniert, lagerstabil ist.

Ferner hat der Erfinder überraschend herausgefunden, dass es möglich ist, mit einer wässrigen Komponente, die ein wasserlösliches Reduktionsmittel und einen teilweise gelösten oder teilweise emulgierten Initiator enthält, unter den für bauliche Anwendungen vorherrschenden Reaktionsbedingungen radikalisch polymerisierbare Verbindungen polymerisieren lassen.

Ein erster Gegenstand der Erfindung ist daher eine Reaktionsharz-Zusammensetzung mit einer radikalisch polymerisierbaren Verbindung, mit einem Initiatorsystem, das einen α-Halogencarbonsäureester und ein Katalysatorsystem, welches ein Kupfer(II)salz, ein Reduktionsmittel und wenigstens einen Stickstoff-enthaltenden Liganden umfasst, enthält, mit einer hydraulisch abbindenden und/oder polykondensierbaren Verbindung und mit Wasser, wobei das Kupfer(II)salz reaktionsinhibierend von dem Reduktionsmittel getrennt ist und wobei das Wasser reaktionsinhibierend von der hydraulisch abbindenden und/oder polykondensierbaren Verbindung getrennt ist.

Das Initiatorsystem umfasst erfindungsgemäß einen Initiator und ein Katalysatorsystem.

Der Initiator ist zweckmäßig eine Verbindung, die über eine Halogen-Kohlenstoff-Bindung verfügt, die durch eine katalysierte homolytische Spaltung C-Radikale liefert, die eine radikalische Polymerisation starten können. Damit eine ausreichend lange Lebensdauer des Radikals gewährleistet ist, muss der Initiator über Substituenten verfügen, die das Radikal stabilisieren können wie z.B. Carbonyl-Substituenten. Einen weiteren Einfluss auf die Initiierung übt das Halogenatom aus.

Das aus dem Initiator gebildete Primärradikal weist bevorzugt eine ähnliche Struktur auf wie das Radikalzentrum der wachsenden Polymerkette. Wenn es sich also bei den Reaktionsharz-Zusammensetzungen um Methacrylatharze oder Acrylatharze handelt, sind α-Halogencarbonsäureester der Isobutansäure oder der Propansäure besonders geeignet. Im Einzelfall sollte aber die besondere Eignung immer durch Versuche ermittelt werden.

Vorteilhaft an der erfindungsgemäßen Zusammensetzung, die Wasser enthält, ist, dass auch α-Halogencarbonsäureester verwendet werden können, welche sich zwar nicht in Wasser lösen aber zumindest emulgiert werden können, solange sich der Initiator gut in radikalisch polymerisierbaren Verbindung und/oder den gegebenenfalls verwendeten Reaktivverdünnern löst. Hierdurch kann das latente Risiko einer Hydrolyse, d.h. die nucleophile Substitution des Bromidions durch ein Hydroxidion verringert werden, wodurch die Lagerstabilität der Zusammensetzung verbessert werden kann.

Für die Anwendung der Reaktionsharz-Zusammensetzung als bauliche Klebe-, Mörtel- oder Dübelmasse insbesondere für mineralische Untergründe hat sich eine Verbindungsklasse als besonders geeignet erwiesen. Dementsprechend ist erfindungsgemäß der Initiator ein α-Halogencarbonsäureester der allgemeinen Formel (I) 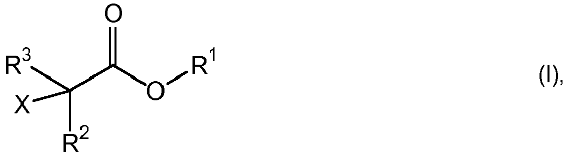 in der
- X: Chlor, Brom oder Iod, bevorzugt Chlor oder Brom, besonders bevorzugt Brom bedeutet;
- R¹: für eine geradkettige oder verzweigte, gegebenenfalls substituierte C₁-C₂₀-Alkylgruppe, bevorzugt C₁-C₁₀-Alkylgruppe, eine Polyalkylenoxidkette bzw. -gruppe oder eine Arylgruppe steht; oder
für den Rest eines acylierten, verzweigten, dreiwertigen Alkohols, den Rest eines vollständig oder partiell acylierten, linearen oder verzweigten, vierwertigen Alkohols, den Rest eines vollständig oder partiell acylierten, linearen fünf-oder sechswertigen Alkohols, den Rest einer vollständig oder partiell acylierten, linearen oder cyclischen C₄-C₆-Aldose oder C₄-C₆-Ketose oder den Rest eines vollständig oder partiell acylierten Disaccharids steht, und Isomere dieser Verbindungen;
- R² und R³: unabhängig voneinander für Wasserstoff, eine C₁-C₂₀-Alkylgruppe, bevorzugt C₁-C₁₀-Alkylgruppe und stärker bevorzugt C₁-C₆-Alkylgruppe, oder eine C₃-C₈-Cycloalkylgruppe, C₂-C₂₀-Alkenyl- oder -Alkinylgruppe, bevorzugt C₂-C₆-Alkenylgruppe oder -Alkinylgruppe, Oxiranylgruppe, Glycidylgruppe, Arylgruppe, Heterocyclylgruppe, Aralkylgruppe, Aralkenylgruppe (aryl-substituierte Alkenylgruppen) stehen.

Derartige Verbindung sowie deren Herstellung sind dem Fachmann bekannt. In dieser Hinsicht wird Bezug genommen auf die Veröffentlichungen WO 96/30421 A1 und WO 00/43344 A1, deren Inhalt hiermit in diese Anmeldung aufgenommen wird.

Geeignete Initiatoren umfassen beispielsweise C₁-C₆-Alkylester einer a-Halo-C₁-C₆-Carbonsäure, wie α-Chlorpropionsäure, α-Brompropionsäure, α-Chlor-*iso*-butansäure, α-Brom-*iso*-butansäure und dergleichen

Bevorzugt sind Ester der α-Brom-*iso*-butansäure. Beispiele geeigneter α-Brom-*iso-*butansäureester sind: Bis[2-(2'-brom-*iso*-butyryloxy)ethyl]disulfid, Bis[2-(2-brom-*iso-*butyryloxy)undecyl]disulfid, α-Brom-*iso*-butyrylbromid, 2-(2-Brom-*iso-*butyryloxy)ethylmethacrylate, *tert*-Butyl-α-brom-*iso*-butyrat, 3-Butynyl-2-brom-*iso*-butyrat, Dipentaerythritolhexakis(2-brom-*iso*-butyrat), Dodecyl-2-brom-*iso*-butyrat, Ethyl-α-brom-iso-butyrat, Ethylenbis(2-brom-*iso*-butyrat), 2-Hydroxyethyl-2-brom-*iso*-butyrat, Methyl-α-brom-iso-butyrat, Octadecyl-2-brom-*iso*-butyrat, Pentaerythritoltetrakis(2-brom-*iso*-butyrat), Poly(ethylenglykol)bis(2-brom-*iso*-butyrate), Poly(ethylenglykol)methylether-2-brom-*iso-*butyrate, 1,1,1-Tris(2-brom-*iso*-butyryloxymethyl)ethan, 10-Undecenyl 2-brom-*iso*-butyrat.

Der Katalysator ist ein Katalysatorsystem mit mehreren Bestandteilen. Der eigentliche Katalysator ist eine Kupfer(I)verbindung, die aus Gründen der Lagerstabilität *in-situ* erzeugt wird. Das Katalysatorsystem besteht erfindungsgemäß aus einem Kupfer(II)salz, einem geeigneten Reduktionsmittel und mindestens einem Liganden.

Zweckmäßig muss das Kupfer an einem Ein-Elektronen-Redoxprozess teilnehmen können, eine hohe Affinität zu einem Halogenatom, insbesondere Brom, haben und es sollte in der Lage sein, reversibel seine Koordinationszahl um eins zu erhöhen. Ferner sollte es zur Komplexbildung neigen.

Der Ligand trägt zweckmäßig zur Löslichkeit des Kupfersalzes in der zu verwendenden radikalisch polymerisierbaren Verbindung bei, sofern das Kupfersalz selbst noch nicht löslich ist und vermag das Redoxpotential des Kupfers in Bezug auf Reaktivität und Halogentransfer einzustellen.

Damit von dem Initiator Radikale abgespalten werden können, welche die Polymerisation der radikalisch polymerisierbaren Verbindungen initiieren, ist eine Verbindung erforderlich, welche die Abspaltung ermöglicht bzw. steuert, insbesondere beschleunigt. Mit einer geeigneten Verbindung wird es möglich, eine bei Raumtemperatur härtende Reaktionsharzmischung bereitzustellen.

Zweckmäßig ist diese Verbindung ein geeigneter Übergangsmetallkomplex, der die Bindung zwischen dem α-Kohlenstoffatom und dem daran angebundenen Halogenatom des Initiators homolytisch zu spalten vermag. Ferner muss der Übergangsmetallkomplex fähig sein, an einem reversiblen Redoxzyklus mit dem Initiator, einem schlafenden Polymerkettenende, einem wachsenden Polymerkettenende oder einer Mischung davon teilzunehmen.

Diese Verbindung ist ein Kupfer(I)komplex der allgemeinen Formel Cu(I)-X·L, der aus einem Kupfer(I)salz und einem geeigneten Ligand (L) gebildet wird. Kupfer(I)-Verbindungen sind häufig jedoch sehr oxidationsempfindlich, wobei sie bereits durch Luftsauerstoff in Kupfer(II)-Verbindungen umgewandelt werden können.

Wird die Reaktionsharzmischung direkt vor deren Verwendung hergestellt, d.h. deren Komponenten vermischt, ist die Verwendung von Kupfer(I)komplexen im Allgemeinen nicht kritisch. Soll allerdings eine über einen gewissen Zeitraum lagerstabile Reaktionsharzmischung bereitgestellt werden, kommt es stark auf die Stabilität des Kupfer(I)komplexes gegenüber Luftsauerstoff oder anderen gegebenenfalls in der Reaktionsharzmischung enthaltenen Bestandteilen an.

Um eine lagerstabile Reaktionsharzmischung bereitzustellen, ist es daher erforderlich das Kupfersalz in stabiler Form einzusetzen. Dementsprechend wird der Kupfer(I)-Komplex *in-situ* aus einem Kupfer(II)salz und einem geeigneten Liganden gebildet. Dazu enthält das Initiatorsystem ferner ein geeignetes Reduktionsmittel, wobei das Kupfer(II)salz und das Reduktionsmittel bevorzugt reaktionsinhibierend getrennt voneinander sind.

Geeignete Kupfer(II)salze sind solche, die entweder in der verwendeten radikalisch polymerisierbaren Verbindung, einem gegebenenfalls der Harzmischung zugegebenen Lösungsmittel, wie etwa ein Reaktivverdünner, und/oder in Wasser zumindest teilweise löslich sind. Derartige Kupfer(II)salze sind beispielsweise Cu(II)(PF₆)₂, CuX₂, mit X = Cl, Br, I, wobei CuX₂ bevorzugt und CuCl₂ oder CuBr₂ mehr bevorzugt ist, Cu(OTf)₂ (-OTf = Trifluormethansulfonat, CF₃SO₃⁻) oder Cu(II)-Carboxylate. Besonders bevorzugt sind solche Kupfer(II)salze, welche abhängig von der verwendeten radikalisch polymerisierbaren Verbindung schon ohne Ligandenzusatz in dieser oder in Wasser zumindest teilweise löslich sind.

Zur Bildung des Kupfer(I)-Komplexes wird, wenn ein Kupfer(II)salz verwendet wird, wie oben erläutert, ein Reduktionsmittel verwendet, das *in-situ* das Kupfer(II) zu einem Kupfer(I) zu reduzieren vermag.

Erfindungsgemäß ist das Reduktionsmittel wasserlöslich. Reduktionsmittel, welche im Wesentlichen ohne Bildung von Radikalen, die ihrerseits neue Polymerketten initiieren können, die Reduktion ermöglichen, können verwendet werden, solange diese wasserlöslich sind. Geeignete Reduktionsmittel sind etwa Ascorbinsäure und deren Derivate, Zinnverbindungen, reduzierende Zucker, z.B. Fructose, Antioxidationsmittel, wie solche, die für die Konservierung von Lebensmitteln Verwendung finden, z.B. Flavonoide (Quercetin), β-Karotinoide (Vitamin A), α-Tocopherol (Vitamin E), phenolische Reduktionsmittel, wie etwa Propyl- oder Octylgallat (Triphenol), Butylhydroxyanisol (BHA) oder Butylhydroxytoluol (BHT), andere Konservierungsmittel für Lebensmittel, wie Nitrite, Propionsäuren, Sorbinsäuresalze oder Sulfate. Weiter geeignete Reduktionsmittel sind SO₂, Sulfite, Bisulfite, Thiosulfate, Mercaptane, Hydroxylamine und Hydrazin und Derivate davon, Hydrazon und Derivate davon, Amine und Derivate davon, Phenole und Enole. Das Reduktionsmittel kann ferner ein Übergangmetall M(0) im Oxidationszustand Null sein. Des Weiteren kann eine Kombination an Reduktionsmittel verwendet werden.

In diesem Zusammenhang wird Bezug genommen auf das US-Patent Nr. 2,386,358, dessen Inhalt hiermit in diese Anmeldung aufgenommen wird.

Bevorzugt ist das Reduktionsmittel unter Ascorbinsäure bzw. deren Salze, sowie unter Bisulfiten ausgewählt.

Geeignete Liganden, insbesondere neutrale Liganden sind aus der Komplexchemie der Übergangsmetalle bekannt. Sie sind mit dem Koordinationszentrum unter Ausprägung von verschiedenen Bindungstypen koordiniert, z.B. σ-, π-, µ-, η-Bindungen. Durch die Wahl des Liganden lässt sich die Reaktivität des Kupfer(I)komplexes gegenüber dem Initiator einstellen sowie die Löslichkeit des Kupfer(I)-Salzes steuern oder verbessern.

Erfindungsgemäß ist der Ligand ein Stickstoff-enthaltender Ligand. Zweckmäßig ist der Ligand ein Stickstoff-enthaltender Ligand, der ein, zwei oder mehr Stickstoffatome enthält, wie etwa mono-, bi- oder tridentate Liganden.

Geeignete Liganden sind Aminoverbindungen mit primären, sekundären und/oder tertiären Aminogruppen, wovon solche mit ausschließlich tertiären Aminogruppen bevorzugt sind, oder Aminoverbindungen mit heterocyclischen Stickstoffatomen, welche besonders bevorzugt sind.

Beispiele geeigneter Aminoverbindungen sind: Ethylendiaminotetraacetat (EDTA), N,N-Dimethyl-N',N'-bis(2-dimethylaminoethyl)ethylendiamin (Me6TREN), N,N'-Dimethyl-1,2-phenyldiamin, 2-(Methylamino)phenol, 3-(Methylamino)-2-butanol, N,N'-Bis(1,1-dimethylethyl)-1,2-ethandiamin oder N,N,N',N",N"-Pentamethyldiethylentriamin (PMDETA), und mono-, bi- oder tridentate heterocyclische Elektronen-Donor-Liganden, wie solche, die von unsubstituierten oder substituierten Heteroarenen abgeleitet sind, wie Furan, Thiophen, Pyrrol, Pyridin, Bipyridin, Picolylimin, γ-Pyran, γ-Thiopyran, Phenanthrolin, Pyrimidin, bis-Pyrimidin, Pyrazin, Indol, Coumarin, Thionaphthen, Carbazole, Dibenzofuran, Dibenzothiophen, Pyrazol, Imidazol, Benzimidazol, Oxazol, Thiazol, Bis-Thiazol, Isoxazol, Isothiazol, Chinolin, Bichinolin, Isochinolin, Biisochinolin, Acridin, Chroman, Phenazine, Phenoxazine, Phenothiazine, Triazine, Thianthren, Purin, Bismidazol und Bisoxazol.

Darunter ist 2,2'-Bipyridin, N-Butyl-2-pyridylmethanimine, 4,4'-Di-*tert*-butyl-2,2'-dipyridin, 4,4'-Dimethyl-2,2'-dipyridin, 4,4`-Dinonyl-2,2'-dipyridin, N-Dodecyl-N-(2-pyridylmethylen)amin, 1,1,4,7,10,10-Hexamtehyltriethylentetramin, N-Octadecyl-N-(2-pyridylmethylen)amin, N-Octyl-2-pyridylmethanimin, N,N,N',N",N"-Pentamethyldiethylentriamine, 1,4,8,11-Tetracyclotetradecan, N,N,N',N'-Tetrakis(2-pyridylmethyl)ethylendiamin, 1,4,8,11-Tetramethyl-1,4,8,11-tetraazacyclotetradecan, Tris[2-(diethylamino)ethyl]amin oder Tris(2-methylpyridyl)amin bevorzugt, wobei N,N,N',N",N"-Pentamethydiethyltriamin (PMDETA), 2,2'-Bipyridin (bipy) oder Phenanthrolin (phen) stärker bevorzugt sind.

Entgegen den Empfehlungen aus der wissenschaftlichen Literatur, die für die einzusetzende Menge an Stickstoff-enthaltenden Liganden in der Regel ein Verhältnis von Cu : Ligand = 1 : 2 als optimal beschreibt, hat der Erfinder überraschend herausgefunden, dass die Reaktionsharz-Zusammensetzung eine deutlich stärkere Reaktivität zeigt, d.h. schneller aushärtet und besser durchhärtet, wenn der Stickstoff-enthaltende Ligand im Überschuss eingesetzt wird. Hierbei bedeutet *"im Überschuss",* dass der Aminligand durchaus im Verhältnis Cu : Ligand = 1 : 5, oder gar bis 1 : 10 eingesetzt wird. Maßgeblich ist, dass dieser Überschuss sich wiederum nicht schädlich auf die Reaktion und die Endeigenschaften auswirken.

Ebenfalls entgegen den Empfehlungen aus der wissenschaftlichen Literatur, hat der Erfinder überraschend herausgefunden, dass die Reaktionsharz-Zusammensetzung unabhängig von der eingesetzten Menge eine deutlich stärkere Reaktivität zeigt, wenn der Ligand eine Stickstoff-enthaltende Verbindung mit primären Aminogruppen ist.

Dementsprechend ist in einer stärker bevorzugten Ausführungsform der Stickstoff-enthaltende Ligand ein Amin mit mindestens einer primären Aminogruppe. Das Amin ist zweckmäßig ein primäres Amin, das aliphatisch, einschließlich cycloaliphatisch, aromatisch und/oder araliphatisch sein kann und ein oder mehrere Amino-Gruppen (im Folgenden als Polyamin bezeichnet) tragen kann. Das Polyamin trägt bevorzugt mindestens zwei primäre aliphatische Amino-Gruppen. Ferner kann das Polyamin auch Amino-Gruppen tragen, die sekundären oder tertiären Charakter haben. Auch Polyaminoamide und Polyalkylenoxid-polyamine oder Aminaddukte, wie Amin-Epoxy Harzaddukte oder Mannichbasen sind ebenso geeignet. Als araliphatisch werden Amine definiert, die sowohl aromatische als auch aliphatische Reste enthalten.

Geeignete Amine, ohne den Umfang der Erfindung einzuschränken, sind beispielsweise: 1,2-Diaminoethan(ethylendiamin), 1,2-Propandiamin, 1,3-Propandiamin, 1,4-Diaminobutan, 2,2-Dimethyl-1,3-propandiamin (Neopentandiamin), Diethylaminopropylamin (DEAPA), 2-Methyl-1,5-diaminopentan, 1,3-Diaminopentan, 2,2,4- oder 2,4,4-Trimethyl-1,6-diaminohexan und Gemische davon (TMD), 1-Amino-3-aminomethyl-3,5,5-trimethylcyclohexan, 1,3-Bis(aminomethyl)-cyclohexan, 1,2-Bis(aminomethyl)cyclohexan, Hexamethylendiamin (HMD), 1,2- und 1,4-Diaminocyclohexan (1,2-DACH und 1,4-DACH), Bis(4-aminocyclohexyl)methan, Bis(4-amino-3-methylcyclohexyl)methan, Diethylentriamin (DETA), 4-Azaheptan-1,7-diamin, 1,11-Diamino-3,6,9-trioxundecan, 1,8-Diamino-3,6-dioxaoctan, 1,5-Diamino-methyl-3-azapentan, 1,10-Diamino-4,7-dioxadecan, Bis(3-aminopropyl)amin, 1,13-Diamino-4,7,10-trioxatridecan, 4-Aminomethyl-1,8-diaminooctan, 2-Butyl-2-ethyl-1,5-diaminopentan, N,N-Bis-(3-aminopropyl)methylamin, Triethylentetramin (TETA), Tetraethylenpentamin (TEPA), Pentaethylenhexamin (PEHA), Bis(4-amino-3-methylcyclohexyl)methan, 1,3-Benzoldimethanamin (m-Xylylendiamin, mXDA), 1,4-Benzoldimethanamin (p-Xylylendiamin, pXDA), 5-(Aminomethyl)bicyclo[[2.2.1]hept-2-yl]methylamin (NBDA, Norbornandiamin), Dimethyldipropylentriamin, Dimethylaminopropyl-aminopropylamin (DMAPAPA), 3-Aminomethyl-3,5,5-trimethylcyclohexylamin (Isophorondiamin (IPD)), Diaminodicyclohexylmethan (PACM), gemischte polycyclische Amine (MPCA) (z.B. Ancamine® 2168), Dimethyldiaminodicyclohexylmethan (Laromin® C260), 2,2-Bis(4-aminocyclohexyl)propan, (3(4),8(9)Bis(aminomethyl)dicyclo[5.2.1.0^{2,6}]decan (Isomerengemisch, tricyclischer primärer Amine; TCD-Diamin).

Bevorzugt sind Polyamine, wie 2-Methylpentandiamin (DYTEK A®), 1-Amino-3-aminomethyl-3,5,5-trimethylcyclohexan (IPD), 1,3-Benzoldimethanamin (m-Xylylendiamin, mXDA), 1,4-Benzoldimethanamin (p-Xylylendiamin, PXDA), 1,6-Diamino-2,2,4-trimethylhexan (TMD), Diethylentriamin (DETA), Triethylentetramin (TETA), Tetraethylenpentamin (TEPA), Pentaethylenhexamin (PEHA), N-Ethylaminopiperazin (N-EAP), 1,3-Bisaminomethylcyclohexan (1,3-BAC), (3(4),8(9)Bis(aminomethyl)dicyclo[5.2.1.0^{2,6}]decan (Isomerengemisch, tricyclischer primärer Amine; TCD-Diamin), 1,14-Diamino-4,11-dioxatetradecan, Dipropylentriamin, 2-Methyl-1,5-pentandiamin, N,N'-Dicyclohexyl-1,6-hexandiamin, N,N'-Dimethyl-1,3-diaminopropan, N,N'-Diethyl-1,3-diaminopropan, N,N-Dimethyl-1,3-diaminopropan, sekundäre Polyoxypropylendi- und triamine, 2,5-Diamino-2,5-dimethylhexan, Bis-(aminomethyl)tricyclopentadien, 1,8-Diamino-p-menthan, Bis-(4-amino-3,5-dimethylcyclohexyl)methan, 1,3-Bis(aminomethyl)cyclohexan (1,3-BAC), Dipentylamin, N-2-(Aminoethyl)piperazin (N-AEP), N-3-(Aminopropyl)piperazin, Piperazin.

Das Amin kann entweder alleine oder als Gemisch aus zweien oder mehreren davon eingesetzt werden.

Erfindungsgemäß enthält die Zusammensetzung mindestens eine hydraulisch abbindende oder polykondensierbare Verbindung. Diese Verbindung dient zunächst dazu, das Wasser aus der wässrigen Komponente zu binden. Darüber hinaus hat das Vorhandensein der hydraulisch abbindenden und/oder polykondensierbaren Verbindung noch weitere positive Eigenschaften auf die Zusammensetzung. Es hat sich gezeigt, dass die erfindungsgemäßen Zusammensetzungen, auch wenn sie die härtbaren Verbindungen völlig unterschiedlicher Stoffklassen im Gemisch enthalten, trotzdem eine außerordentlich günstige Lagerfähigkeit aufweisen. Ein weiterer Vorteil der erfindungsgemäßen Zusammensetzung besteht unter anderem in der reduzierten Schrumpfneigung, in der erhöhten Wärmeformbeständigkeit, dem verbesserten Brandverhalten, der Resistenz gegen klimatische Bedingungen, der höheren Verbundfestigkeit, günstigerem Ausdehnungskoeffizienten (mehr zu Beton/Stahl), Langzeitverhalten, Temperaturwechselbeständigkeit. Besonders günstig ist wegen der hohen Benetzungsfähigkeit die komplikationslose Verwendbarkeit in nassen und/oder staubigen Bohrlöchern. Dabei wird in aller Regel eine besonders günstige Festigkeit und Adhäsion an der Bohrlochwandung erzielt.

Bevorzugt werden als härtbare hydraulisch abbindende Verbindungen Zemente, insbesondere Aluminat-Zement, verwendet. Derartige Aluminat-Zemente enthalten hauptsächlich Calciumaluminatverbindungen, beispielsweise Monocalciumaluminat und/oder Bicalciumaluminat, als reaktive Verbindungen, wobei auch andere Anteile, beispielsweise Aluminiumoxid, Calciumaluminatsilikate und Ferrite möglich sind. Die analytischen Al₂O₃-Werte liegen häufig, wenn auch nicht notwendigerweise, über 35-%. Ganz allgemein haben sich weitgehend Eisenoxidfreie bzw. Eisenoxid-arme Zemente bewährt, d. h. Zemente, deren Eisenoxidgehalte unter etwa 10 Gew.-%, insbesondere unter 5 Gew.-% und ganz bevorzugt unter 2 oder 1 Gew.-%, liegen. So haben sich beispielsweise auch Hochofen-Zemente mit ihren geringen Eisenoxidgehalten neben oder anstelle der Aluminat-Zemente bewährt. Gips ist ein weiteres Beispiel für hydraulisch abbindende, im Rahmen der vorliegenden Erfindung brauchbare Verbindungen. Gips/Zementmischungen sind nur möglich unter Verwendung von Zementen, die einen hohen Sulfatwiderstand aufweisen.

Zu anorganischen Stoffen, die in Gegenwart von Wasser oder wässrigen Lösungen polykondensieren, gehören vorzugsweise silikatische Stoffe, insbesondere auf Grundlage von löslichem und/oder feinteiligem, amorphem SiO₂, wobei das SiO₂ teilweise, z. B. bis 50 Gew.-%, durch Al₂O₃ ersetzt sein kann. Die Stoffe können Alkalihydroxide, insbesondere NaOH und/oder KOH, Alkalisilikate, namentlich vom Wasserglas-Typ und/oder meta-Kaolinit, enthalten, wobei die Hydroxide und/oder Silikate auch als wässrige Zubereitungen zur Härtung verwendet werden können. Stoffe dieser Art sind z. B. in EP-0 148 280 B1 beschrieben, auf die hiermit als brauchbar im Sinne der Erfindung Bezug genommen wird.

In einer bevorzugten Ausführungsform der Erfindung enthält die Reaktionsharz-Zusammensetzung weitere niederviskose, radikalisch polymerisierbare Verbindungen als Reaktivverdünner für die radikalisch polymerisierbare Verbindung, um deren Viskosität falls erforderlich, anzupassen.

Geeignete Reaktivverdünner sind in den Veröffentlichungen EP 1 935 860 A1 und DE 195 31 649 A1 beschrieben. Vorzugsweise enthält die Harzmischung als Reaktivverdünner einen (Meth)acrylsäureester, wobei besonders bevorzugt (Meth)acrylsäureester aus der Gruppe ausgewählt werden, bestehend aus Hydroxypropyl(meth)acrylat, Propandiol-1,3-di(meth)acrylat, Butandiol-1,2-di(meth)acrylat, Trimethylolpropantri(meth)acrylat, 2-Ethylhexyl(meth)acrylat, Phenylethyl-(meth)acrylat, Tetrahydrofurfuryl(meth)acrylat, Ethyltriglykol(meth)acrylat, N, N-Dimethylaminoethyl(meth)acrylat, N,N-Dimethylaminomethyl(meth)acrylat, Butandiol-1,4-di(meth)acrylat, Acetoacetoxyethyl(meth)acrylat, Ethandiol-1,2-di(meth)acrylat, Isobornyl(meth)acrylat, Diethylenglykoldi(meth)acrylat, Methoxypolyethylenglykolmono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1.0.^{2.6}-decan, Dicyclopentenyloxyethylcrotonat, 3-(Meth)acryloyl-oxymethyl-tricylo-5.2.1,0.^{2.6}-decan, 3-(Meth)cyclopentadienyl(meth)acrylat, Isobornyl(meth)acrylat und Decalyl-2-(meth)acrylat.

Grundsätzlich können auch andere übliche radikalisch polymerisierbaren Verbindungen, allein oder im Gemisch mit den (Meth)acrylsäureestern, eingesetzt werden, z. B. Styrol, α-Methylstyrol, alkylierte Styrole, wie tert-Butylstyrol, Divinylbenzol und Allylverbindungen.

In einer bevorzugten Ausführungsform wird ein wasserlöslicher Reaktivverdünner verwendet, wie beispielsweise Hydroxyethylmethacrylat, Hydroxypropymethacrylat, Polyethylenglycol-Mono- oder -Di-Methacrylate. Hierdurch kann der Wassergehalt reduziert werden, ohne die positiven Eigenschaften der Zusammensetzung und deren Vorteile zu beeinträchtigen. Hierdurch kann auch verhindert werden, dass sich durch einen zu hohen Wasseranteil die Robustheit der Zusammensetzung beeinträchtigt wird, insbesondere verringert wird. Es ist möglich, das Wasser bis zur Hälfte durch wasserlösliche Reaktivverdünner zu ersetzen. Ferner hat ein wasserlöslicher Reaktivverdünner den Vorteil, dass gegebenenfalls auf das Tensid verzichtet werden kann.

In einer weiteren Ausführungsform der Erfindung enthält die Reaktionsharz-Zusammensetzung ferner einen Inhibitor, insbesondere einen nicht-phenolischen Inhibitor.

Als Inhibitor sowohl für die Lagerstabilität der radikalisch polymerisierbaren Verbindung und damit auch des Harzbestandteils als auch zur Einstellung der Gelzeit sind die für radikalisch polymerisierbare Verbindungen üblicherweise als Inhibitoren verwendeten stabilen Radikale, wie *N*-Oxyl-Radikale geeignet, wie sie dem Fachmann bekannt sind. Phenolische Inhibitoren, wie sie sonst üblicherweise in radikalisch härtbaren Harzzusammensetzungen Verwendung finden, können hier nicht verwendet werden, da die Inhibitoren als Reduktionsmittel mit dem Kupfer(II)salz reagieren würden, was sich nachteilig auf die Lagerstabilität und die Gelzeit auswirken würde.

Als *N*-Oxyl-Radikale können beispielsweise solche verwendet werden, wie sie in der DE 199 56 509 A1 beschrieben sind. Geeignete stabile *N*-Oxyl-Radikale (Nitroxylradikale) können unter 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet), Aluminium-N-nitrosophenylhydroxylamin, Diethylhydroxylamin ausgewählt werden. Ferner sind geeignete N-oxyl Verbindungen Oxime, wie Acetaldoxim, Acetonoxim, Methylethylketoxim, Salicyloxim, Benzoxim, Glyoxime, Dimethylglyoxim, Aceton-0-(benzyloxycarbonyl)oxim, oder Indolin- Nitroxidradikale, wie 2,3-Dihydro-2,2-diphenyl-3-(phenylimino)-1H-indol-1-oxylnitroxid, oder β-phosphorylierte Nitroxidradikale, wie 1-(Diethoxyphosphinyl)-2,2-dimethylpropyl-1,1-dimethylmethyl-nitroxid, und dergleichen.

Die Reaktionsharz-Zusammensetzung kann ferner weitere anorganische Zuschlagstoffe enthalten, wie Füllstoffe und/oder weitere Zusätze.

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z. B. pyrogene Kieselsäure), Silikate, Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z. B. Tonerd- oder Portlandzement), Metalle, wie Aluminium, Ruß, ferner Holz, mineralische oder organische Fasern, oder dergleichen, oder Gemische von zwei oder mehr davon, die als Pulver, in körniger Form oder in Form von Formkörpern zugesetzt sein können, Verwendung. Die Füllstoffe können in beliebigen Formen vorliegen, beispielsweise als Pulver oder Mehl, oder als Formkörper, z. B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von 10 mm. Bevorzugt und deutlicher verstärkend wirken sich jedoch die globulären, inerten Stoffe (Kugelform) aus.

Denkbare Additive sind Thixotropiermittel, wie gegebenenfalls organisch nachbehandelte pyrogene Kieselsäure, Bentonite, Alkyl- und Methylcellulosen, Rhizinusölderivate oder dergleichen, Weichmacher, wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon, möglich. Auch nicht reaktive Verdünnungsmittel (Lösungsmittel) können vorliegen, wie Niederalkylketone, z. B. Aceton, Diniederalkyl-niederalkanoylamide, wie Dimethylacetamid, Niederalkylbenzole, wie Xylole oder Toluol, Phthalsäureester oder Paraffine, Wasser oder Glykole. Ferner können Metallfänger in Form von oberflächenmodifizierten pyrogenen Kieselsäuren in der Reaktionsharz-Zusammensetzung enthalten sein.

In dieser Hinsicht wird Bezug genommen auf die Veröffentlichungen WO 02/079341 A1 und WO 02/079293 A1 sowie WO 2011/128061 A1, deren Inhalt hiermit in diese Anmeldung aufgenommen wird.

Um ein lagerstabiles System bereitzustellen, wird wie bereits erwähnt der Kupfer(I)-Komplex erst *in-situ,* d.h. beim Mischen der entsprechenden Reaktanten, aus einem geeigneten Kupfer(II)salz, dem Stickstoff-enthaltenden Liganden und einem geeigneten Reduktionsmittel erzeugt. Dementsprechend ist es erforderlich, das Kupfer(II)salz und das Reduktionsmittel reaktionsinhibierend voneinander zu trennen. Dies geschieht gewöhnlich dadurch, dass das Kupfer(II)salz in einer ersten Komponente und das Reduktionsmittel in einer von der ersten Komponenten getrennten zweiten Komponente gelagert wird. Ferner muss die wasserhaltige Komponente, also die wässrige Lösung des Reduktionsmittels und die wässrige Lösung bzw. die Emulsion des Initiators in Wasser getrennt von der hydraulisch abbindenden und/oder polykondensierbaren Verbindung gelagert werden.

Dementsprechend ist ein weiterer Gegenstand der Erfindung ein Zwei- oder Mehrkomponenten-System, welches die beschriebene Reaktionsharz-Zusammensetzung enthält.

Um ein lagerstabiles System bereitzustellen, ist es erforderlich, die Bestandteile der Reaktionsharz-Zusammensetzung räumlich so anzuordnen, dass die härtbaren Bestandteile nicht vorzeitig, d.h. vor deren Anwendung beginnen auszuhärten. Hierzu müssen zum einen die hydraulisch abbindende Verbindung bzw. die polykondensierbare Verbindung oder wenn eine Kombination davon verwendet wird, beide reaktionsinhibierend von dem Wasser getrennt gelagert werden. Zum anderen muss die Polymerisation der radikalisch polymerisierbaren Verbindung verhindert werden. Dies kann dadurch erreicht werden, indem das Kupfer(II)salz reaktionsinhibierend vom Reduktionsmittel getrennt vorliegt. Damit wird verhindert, dass die reaktive Spezies, nämlich des reaktiven Kupfer(I)-Komplexes gebildet und damit die Polymerisation der radikalisch polymerisierbaren Verbindung bereits bei der Lagerung initiiert wird. Die Trennung wird erreicht, in dem die Bestandteile jeweils in einer getrennt voneinander angeordneten Komponente enthalten sind.

Ferner ist bevorzugt, auch den Initiator vom Kupfer(II)salz zu trennen, da nicht ausgeschlossen werden kann, dass geringen Mengen an Kupfer(I)salz vorhanden sind, da das Kupfer(II)salz im Gleichgewicht mit dem entsprechenden Kupfer(I)salz vorliegen kann, welches zusammen mit dem Initiator eine schleichende Initiierung verursachen könnte. Dies würde zu einer vorzeiten zumindest teilweisen Polymerisierung (Gelierung) der radikalisch polymerisierbaren Verbindung und damit zu einer verminderten Lagerstabilität führen. Des Weiteren hätte dies einen negativen Einfluss auf die voreingestellte Gelzeit der Zusammensetzung, was sich in einer Gelzeitdrift äußern würde. Dies hat den Vorteil, dass auf den Einsatz von hochreinen und damit sehr teuren Kupfer(II)salzen verzichtet werden kann.

In einer möglichen Ausführungsform der Erfindung wird die vorher beschriebene Reaktionsharz-Zusammensetzung als Zweikomponenten-System konfektioniert, wobei die radikalisch polymerisierbare Verbindung zusammen mit der hydraulisch abbindenden und/oder polykondensierbaren Verbindung in einer ersten Komponente und das Wasser in einer zweiten Komponente enthalten sind. Das Initiatorsystem ist dabei so aufgeteilt, dass die Kupfer(II)salz vollständig entweder in der ersten Komponente oder in der zweiten Komponente enthalten ist. Das Reduktionsmittel ist dementsprechend in der jeweils anderen Komponente enthalten, um eine Reduktion des Kupfer(II) zu Kupfer(I) zu verhindern. Der Initiator und unabhängig davon der Stickstoff-enthaltende Ligand sind entweder ganz in einer der beiden Komponenten enthalten oder sind jeweils zu gleichen oder unterschiedlichen Teilen auf beide Komponenten verteilt. Vorzugsweise sind der Initiator und das Kupfer(II)salz in unterschiedlichen Komponenten enthalten.

Je nachdem wie das Initiatorsystem auf die beiden Komponenten aufgeteilt ist, sind der Initiator, die Kupfer(II)salz, dass Reduktionmittel und der Ligand so zu wählen, dass diese zumindest teilweise in der radikalisch polymerisierbaren Verbindung bzw. dem Wasser löslich oder emulgierbar sind.

Somit ergeben sich basierend auf der eben beschriebenen Ausführungsform beispielhaft folgende Möglichkeiten der Konfektionierung der erfindungsgemäßen Reaktionsharz-Zusammensetzung als Zweikomponenten-System:

| (i) | **Komponente I** |
|---|---|
| | radikalisch polymerisierbare Verbindung |
| | hydraulisch abbindende Verbindung und/oder polykondensierbare |
| | Verbindung |
| | Kupfer(II)salz |
| | ggf. Additive und Füllstoffe |
| | |

| | **Komponente II** |
|---|---|
| | Wasser |
| | Reduktionsmittel |
| | α-Halogencarbonsäureester |
| | ggf. Additive und Füllstoffe |
| | |

| (ii) | **Komponente I** |
|---|---|
| | radikalisch polymerisierbare Verbindung |
| | hydraulisch abbindende Verbindung und/oder polykondensierbaren |
| | Verbindung |
| | Reduktionsmittel |
| | α-Halogencarbonsäureester |
| | ggf. Additive und Füllstoffe |
| | |

| | **Komponente II** |
|---|---|
| | Wasser |
| | Kupfer(II)salz |
| | ggf. Additive und Füllstoffe |

Bei Möglichkeit (i) wird das Kupfer(II)salz so gewählt, dass dieses in der radikalisch polymerisierbaren Verbindung zumindest teilweise löslich oder emulgierbar ist und das Reduktionsmittel sowie der α-Halogencarbonsäureester zumindest teilweise in Wasser löslich oder emulgierbar sind. Hierzu wird gewöhnlich das Reduktionsmittel in Wasser gelöst. Der α-Halogencarbonsäureester kann entweder direkt in Wasser gelöst oder emulgiert werden und als Lösung bzw. Emulsion der Komponente II Zusammensetzung zugegeben werden, oder er wird in der wässrigen Lösung des Reduktionsmittels gelöst oder emulgiert.

Bei Möglichkeit (ii) ist dies entsprechend umgekehrt, so dass das Kupfer(II)salz so gewählt wird, dass dieses in Wasser zumindest teilweise löslich oder emulgierbar ist und das Reduktionsmittel sowie der α-Halogencarbonsäureester zumindest teilweise in der radikalisch polymerisierbaren Verbindung löslich oder emulgierbar sind.

Die Erfinder haben beobachtet, dass bei bestimmten Stickstoff-enthaltenden Liganden insbesondere bei der Verwendung von Methacrylaten als radikalisch polymerisierbare Verbindungen auch ohne Anwesenheit von Initiator und Reduktionsmittel eine heftige Reaktion erfolgt. Die scheint dann aufzutreten, wenn es sich um einen Liganden mit tertiären Aminogruppen handelt und der Ligand am Stickstoffatom einen Alkylrest mit α-H-Atomen enthält. In diesem Fall ist der Ligand bevorzugt vollständig von der radikalisch polymerisierbaren Verbindung in der Komponente II getrennt zu halten.

Je nach Auswahl des Stickstoff-enthaltenden Liganden können der Ligand und das Kupfer(II)salz über einen längeren Zeitraum lagerstabil in einer Komponente enthalten sein, insbesondere bei den bevorzugten Aminen mit primären Aminogruppen.

Somit betrifft eine besonders bevorzugte Ausführungsform der Erfindung ein Zweikomponenten-System, welches eine Reaktionsharz-Zusammensetzung enthält, die eine radikalisch polymerisierbare Verbindung, einen α-Halogencarbonsäureester, ein Kupfer(II)salz, einen Stickstoff-enthaltenden Liganden, ein Reduktionsmittel, Wasser, eine hydraulisch abbindenden Verbindung und/oder polykondensierbare Verbindung, einen Inhibitor, gegebenenfalls mindestens einen Reaktivverdünner und gegebenenfalls anorganische Zuschlagstoffe umfasst. Dabei sind in einer ersten Komponente, der Komponente I, die radikalisch polymerisierbare Verbindung, die hydraulisch abbindenden Verbindung und/oder polykondensierbare Verbindung und das Kupfer(II)salz enthalten und in einer zweiten Komponente, der Komponente II, das Wasser, der α-Halogencarbonsäureester, das Reduktionsmittel und der Stickstoff-enthaltende Ligand enthalten, wobei die beiden Komponenten getrennt voneinander gelagert sind, um eine Reaktion der Bestandteile untereinander vor deren Vermischen zu verhindern. Der Inhibitor, gegebenenfalls der Reaktivverdünner sowie gegebenenfalls die anorganischen Zuschlagstoffe sind auf die beiden Komponenten verteilt.

Die Reaktionsharz-Zusammensetzung kann in einer Patrone, einem Gebinde, einer Kapsel oder einem Folienbeutel, welcher zwei oder mehrere Kammern umfasst, die voneinander getrennt sind und in denen das Kupfer(II)salz und das Reduktionsmittel bzw. das Kupfer(II)salz und das Reduktionsmittel sowie der Ligand reaktionsinhibierend getrennt voneinander enthalten sind, enthalten sein.

Die erfindungsgemäße Reaktionsharz-Zusammensetzung findet vor allem im Baubereich Verwendung, etwa zur Instandsetzung von Beton, als Polymerbeton, als Beschichtungsmasse auf Kunstharzbasis oder als kalthärtende Straßenmarkierung. Besonders eigenen sie sich zur chemischen Befestigung von Verankerungselementen, wie Ankern, Bewehrungseisen, Schrauben und dergleichen, in Bohrlöchern Verwendung, insbesondere in Bohrlöchern in verschiedenen Untergründen, insbesondere mineralischen Untergründen, wie solche auf der Grundlage von Beton, Porenbeton, Ziegelwerk, Kalksandstein, Sandstein, Naturstein und dergleichen.

Ein weiterer Gegenstand der Erfindung ist die Verwendung der Reaktionsharz-Zusammensetzung als Bindemittel, insbesondere zur Befestigung von Verankerungsmitteln in Bohrlöchern verschiedenen Untergrunds und zum baulichen Kleben.

Die vorliegende Erfindung betrifft auch die Verwendung der oben definierten Reaktionsharzmörtel-Zusammensetzung für Bauzwecke, umfassend das Aushärten der Zusammensetzung durch Mischen des Kupfer(II)salzes mit dem Reduktionsmittel oder des Kupfer(II)salzes mit dem Reduktionsmittel und dem Liganden.

Stärker bevorzugt wird die erfindungsgemäße Reaktionsharzmörtel-Zusammensetzung zum Befestigen von Gewindeankerstangen, Bewehrungseisen, Gewindehülsen und Schrauben in Bohrlöchern in verschiedenen Untergründen verwendet, umfassend das Mischen des Kupfer(II)salzes mit dem Reduktionsmittel oder des Kupfer(II)salzes mit dem Reduktionsmittel und dem Liganden, Einbringen der Mischung in das Bohrloch, Einführen der Gewindeankerstangen, der Bewehrungseisen, der Gewindehülsen und der Schrauben in die Mischung in dem Bohrloch und Aushärten der Mischung.

Die Erfindung wird anhand einer Reihe von Beispielen und Vergleichsbeispielen näher erläutert. Alle Beispiele stützen den Umfang der Ansprüche. Die Erfindung ist jedoch nicht auf die spezifischen, in den Beispielen gezeigten Ausführungsformen beschränkt.

### AUSFÜHRUNGSBEISPIELE

Zur Herstellung der nachfolgenden Beispielformulierungen wurden folgende Bestandteile verwendet:

| **Abkürzung** | **Bezeichnung** |
|---|---|
| UMA-Präpolymer I | Präpolymer aus MDI und HPMA (DE4111828) mit 35 Gew.-% BDDMA |
| UMA-Präpolymer II | Präpolymer aus MDI und HPMA (DE4111828) mit 35 Gew.-% HPMA |
| Harzmischung I | 33,3 Gew.-% UMA-Präpolymer I + 33,3 Gew.-% HPMA + 33,3 Gew.-% BDDMA |
| MDI | Diphenylmethandiisocyanat |
| BDDMA | 1,4-Butandioldimethacrylat |
| HPMA | Hydroxypropylmethacrylat |
| THFMA | Tetrahydrofurfurylmethacrylat |
| BiBEE | α-Bromisobuttersäureethylester oder 2-Bromisobuttersäureethylester |
| Bipy | 2,2'-Bipyridin |
| PMDETA | N,N,N',N",N"-Pentamethyldiethylentriamin |
| Sn-octoat | Sn(II)ethylhexanoat |
| Tempol | 4-Hydroxy-2,2,6,6-tetramethylpiperidinoxyl |
| Tween 80 | Polyoxyethylenorbitanmonooleat; Sigma-Aldrich |
| Span 80 | Sorbitanmonooleat; Sigma-Aldrich |
| Betolin V30 | anionischer Verdicker auf Polysaccharid-Basis; Wöllner GmbH & Co. KG |
| Aerosil 200 | pyrogene Kieselsäure; Evonic Resource Efficiency GmbH |
| Millisil W12 | Quarzmehl; Quarzwerke GmbH |
| Quarzsand F12 | Quarzsand; Quarzwerke Österreich GmbH |
| Cab-O-Sil® TS-720 | pyrogene Kieselsäure; Cabot Corp. |
| Secar 80 | Calcium-Aluminium-Zement; Kerneos Inc. |
| HLB | hydrophilic-lipophilic balance |

Anhand der Beispielformulierungen soll aufgezeigt werden, dass die erfindungsgemäßen Zusammensetzungen zumindest bei Raumtemperatur (25°C) ein hinreichend gutes Aushärteverhalten zeigen, was darauf schließen lässt, dass die Zusammensetzungen die prinzipielle Eignung haben, als kalthärtende Systeme, beispielsweise im Bereich der chemischen Befestigung, eingesetzt werden zu können.

### Bestimmung der Gelzeit und der Exothermie

Die Bestimmung der Gelzeit der Zusammensetzungen erfolgt mit einer handelsüblichen Vorrichtung (GELNORM®-Gel Timer) bei einer Temperatur von 25°C. Hierzu werden alle Bestandteile gemischt. Dieses Gemisch wird bis zu einer Höhe von 4 cm unterhalb des Randes in ein Teströhrchen gefüllt, wobei das Teströhrchen bei einer Temperatur von 25°C gehalten wird. (DIN 16945, DIN EN ISO 9396). Ein Glasstab oder eine Spindel wird mit 10 Hüben pro Minuten in dem Harz auf und ab bewegt. Die Gelzeit entspricht dem Zeitpunkt, zu dem das Teströhrchen durch den oszillierenden Stab angehoben wird. Zusätzliche Tests haben gezeigt, dass der Grad der Aushärtung am Gelpunkt (gemessen durch dynamische Differenzkalometrie (DSC)) innerhalb der Messgenauigkeit konstant ist.

Die Wärmeentwicklung der Probe wird gegen die Zeit aufgetragen. Die Auswertung erfolgt gemäß DIN16945. Die Gelzeit ist die Zeit, bei der ein Temperaturanstieg um 10K erreicht wird, hier von 25°C nach 35°C.

Die Reaktivitätsmessung (Exothermie) erfolgt gemäß DIN 16945.

Ferner wurde die Peakzeit und die Peaktemperatur gemessen. Peakzeit ist die Zeit, bis die maximale Temperatur erreicht wurde. Peaktemperatur ist die maximale Temperatur, die im Geltimer während der Aushärtung gemessen wird. Sie ist ein Maß für die Qualität der Härtung. Je höher die Peaktemperatur bei gleicher Gelzeit ist, desto besser härtet die Probe aus.

### Beispiele 1 bis 5 (Initiator in der B-Komponente)

Allgemeine Zusammensetzung der Beispiele 1 bis 5 mit einem Mischungsverhältnis von 3:1:

| A-Komponente | B-Komponente |
|---|---|
| • Monomere | • Wasser |
| • Inhibitor | • Reduktionsmittel |
| • Ligand | • Initiator |
| • Kupfer(II)salz | • Tensid |
| • Calcium-Aluminat- Zement | • Kieselsäure |
| • Kieselsäure | • Füllstoffe |
| • Füllstoffe | |

Für die Beispiele 1 bis 5 wurde eine A-Komponente mit folgender Zusammensetzung verwendet:

| | Gew.-% |
|---|---|
| Harzmischung I | 40,29 |
| Kupferbis(2-ethylhexanoat) | 0,15 |
| Tempol | 0,0243 |
| Bipy | 0,0334 |
| CAB-O-SIL® TS-720 | 2,5 |
| Calcium-Aluminat-Zement | 18,5 |
| Quarzsand | 38,5 |

Die A-Komponente wurde hergestellt, indem das Kupferbis(2-ethylhexanoat), das Tempol, der Harzmischung und das Bipy in einer Speedmixer Dose über 1 Stunde bei 300 U/min gemischt wurden. Anschließend wurden nacheinander pyrogene Kieselsäure, Quarzmehl und dann Quarzsand zugegeben und vor jeder Zugabe der Bestandteil von Hand gerührt. Abschließend wurde durch einen Dissolver über 8 Min. bei 2500 U/min gemischt, die Mischung in Kartuschen abgefüllt und bei 25 °C gelagert.

### Beispiel 1 (Ascorbinsäure als Reduktionsmittel)

Die B-Komponente wies folgende Zusammensetzung auf:

| | Gew.-% |
|---|---|
| L-Ascorbinsäure | 0,46 |
| vollentsalztes Wasser | 38,76 |
| Tween 80 | 0,75 |
| BiBEE | 0,50 |
| Aerosil 200 | 2,50 |
| Millisil W12 | 18,51 |
| Quarzsand F32 | 38,52 |

Zur Herstellung der B-Komponente wurden die L-Ascorbinsäure, vollentsalztes Wasser, Tween 80 und BiEE in einer Speedmixer Dose über 1 Stunde bei 300 U/min gemischt. Anschließend wurden nacheinander pyrogene Kieselsäure, Quarzmehl und dann Quarzsand zugegeben, wobei nach jeder Zugabe die Mischung per Hand gerührt wurde. Abschließend wurde die Mischung mit einem Dissolver über 8 Minuten bei 2500 U/min gemischt, in eine Kartusche abgefüllt und bei 25 °C gelagert.

### Beispiel 2 (Natriumascorbat als Reduktionsmittel)

Die B-Komponente wies folgende Zusammensetzung auf:

| | Gew.-% |
|---|---|
| Natriumascorbat | 0,51 |
| vollentsalztes Wasser | 38,76 |
| Tween 80 | 0,75 |
| BiBEE | 0,507 |
| Aerosil 200 | 2,5 |
| Millisil W12 | 18,5 |
| Quarzsand F32 | 38,5 |

Zur Herstellung der B-Komponente wurden das Natriumascorbat, das vollentsalzte Wasser, TWEEN 80 und der BiBEE in einer Speedmixer Dose über 1 Stunde bei 300 U/min gemischt. Anschließend wurden nacheinander pyrogene Kieselsäure, Quarzmehl und dann Quarzsand zugegeben, wobei nach jeder Zugabe die Mischung per Hand gerührt wurde. Abschließend wurde die Mischung mit einem Dissolver über 8 Minuten bei 3500 U/min gemischt, in eine Kartusche abgefüllt und bei 25 °C gelagert.

### Beispiel 3 (System mit einer Initiator-Emulsion (HLB=13)

Die B-Komponente wies folgende Zusammensetzung auf:

| | Gew.-% |
|---|---|
| Natriumascorbat | 0,52 |
| vollentsalztes Wasser | 39,00 |
| Tween 80 | 0,62 |
| Span 80 | 0,15 |
| Betolin V30 | 0,20 |
| BiBEE | 0,52 |
| Pyrogene Kieselsäure | 1,62 |
| Millisil W12 | 18,62 |
| Quarzsand F33 | 38,75 |

Zur Herstellung der B-Komponente wurden das Natriumascorbat und das voll-entionisierte Wasser in einer Speedmixer Dose über 1 Stunde bei 300 U/min gemischt. Zu dieser Mischung wurde Betolin V30 gegeben und über 4 bis 5 Stunden bei 300 U/Min gemischt. Das so erhaltene Emulgatorgemisch wurde mit BiBEE mittels eines Magnetrührers über 3 bis 4 Stunden bei 250-300 U/min gemischt. Hierzu wurde vollentsalztes Wasser unter Rühren bei 250-300U/Min zugetropft bis eine Emulsion Ö/W (22%/ÖI) erhalten wurde. Zu dieser Emulsion wurde eine Natriumascorbat-Lösung mit Xanthan langsam unter Rühren zugegeben. Die erhaltende Emulsion wird anschließend mit einem Dissolver über 30 Min. bei 1700U/Min gerührt. Anschließend wurden nacheinander Aerosil 200, Millisil W12 und dann Quarzsand F32 zugegeben, wobei nach jeder Zugabe die Mischung per Hand gerührt wurde. Abschließend wurde die Mischung mit einem Dissolver über 8 Minuten bei 3500 U/min gemischt und in eine Kartusche abgefüllt.

### Beispiel 4 (System mit einer Initiator-Nanoemulsion (HLB=15))

Die B-Komponente wies folgende Zusammensetzung auf:

| | Gew.-% |
|---|---|
| Natriumascorbat | 0,515 |
| Vollentsalztes E-Wasser | 38,76 |
| Tween 80 | 0,760 |
| 2-Bromisobuttersäureethylester | 0,507 |
| Aerosil A200 | 2,5 |
| Millisil W12 | 18,49 |
| Quarzsand F32 | 38,47 |

Zur Herstellung der B-Komponente wurden das Natriumascorbat und das voll-entionisierte Wasser in einer Speedmixer Dose über 10 Minuten bei 300 U/min gemischt. Das so erhaltene Emulgatorgemisch wurde mit BiBEE mittels eines Magnetrührers über 3 bis 4 Stunden bei 250-300 U/min gemischt. Hierzu wurde die Natriumascorbat-Lösung unter Rühren bei 250-300U/Min 1 Tropfen/30s bis 20 Gew.-% dann 1 Tropfen/1min30s bis die Emulsion flüssig wurde, zugetropft. Zu dieser Emulsion wurde eine Natriumascorbat-Lösung mit Xanthan langsam unter Rühren zugegeben. Die erhaltende Emulsion wird anschließend mit einem Dissolver über 30 Min. bei 1700U/Min gerührt. Anschließend wurden nacheinander Aerosil 200, Millisil W12 und dann Quarzsand F32 zugegeben, wobei nach jeder Zugabe die Mischung per Hand gerührt wurde. Abschließend wurde die Mischung mit einem Dissolver über 8 Minuten bei 3500 U/min gemischt und in eine Kartusche abgefüllt.

### Beispiel 5 (System mit einer Initiator-Nanoemulsion (HLB=15))

Die B-Komponente wies folgende Zusammensetzung auf:

| | Gew.-% |
|---|---|
| L-Ascorbinsäure | 0,46 |
| vollentsalztes Wasser | 38,78 |
| Tween 80 | 0,76 |
| BiBEE | 0,50 |
| Aerosil A200 | 2,50 |
| Millisil W12 | 18,50 |
| Quarzsand F32 | 38,50 |

Zur Herstellung der B-Komponente wurden die Ascorbinsäure und das voll-entionisierte Wasser in einer Speedmixer Dose über 10 Minuten bei 300 U/min gemischt. Das so erhaltene Emulgatorgemisch wurde mit BiBEE mittels eines Magnetrührers über 3 bis 4 Stunden bei 250-300 U/min gemischt. Hierzu wurde die Ascorbinsäure-Lösung unter Rühren bei 250-300U/Min 1 Tropfen/30s bis 20 Gew.-% dann 1 Tropfen/1min30s bis die Emulsion flüssig wurde, zugetropft. Zu dieser Emulsion wurde eine Ascorbinsäure-Lösung langsam unter Rühren zugegeben. Anschließend wurden nacheinander Aerosil 200, Millisil W12 und dann Quarzsand F32 zugegeben, wobei nach jeder Zugabe die Mischung per Hand gerührt wurde. Abschließend wurde die Mischung mit einem Dissolver über 8 Minuten bei 3500 U/min gemischt und in eine Kartusche abgefüllt.

**Tabelle 1: Ergebnisse der Gelzeitmessungen der frisch hergestellten Zusammensetzungen und der Zusammensetzung nach Lagerung über den angegebenen Zeitraum**

| **Beispiel** | **1** | | **2** | | **3** | | **4** | | **5** |
|---|---|---|---|---|---|---|---|---|---|
| | frisch | 14 Tage | frisch | 2 Tage | frisch | 2 Tage | frisch | 2 Tage | 3 Tage |
| **Gelzeit 5°C [min]** | 29,92 | | | | | | | | |
| Peakzeit [min] | 28,93 | | | | | | | | |
| Peaktemperatur [°C] | 35,44 | | | | | | | | |
| **Gelzeit 25°C [min]** | 4,05 | 4,03 | 5,22 | 5,07 | 18,97 | 19,53 | 8,35 | 8,43 | 10,62 |
| Peakzeit [min] | 4,98 | 5,47 | 6,45 | 7,25 | 23,05 | 24,44 | 9,50 | 10,22 | 12,23 |
| Peaktemperatur [°C] | 82,20 | 76,97 | 77,59 | 75,13 | 58,86 | 57,96 | 77 | 72,93 | 71,60 |
| **Gelzeit 40°C [min]** | 0,03 | | | | | | | | |
| Peakzeit [min] | 1,60 | | | | | | | | |
| Peaktemperatur [°C] | 101,85 | | | | | | | | |

Diese Ergebnisse zeigen, dass die Systeme mit emulgiertem Initiator eine gute Aushärtung aufweisen und dass die Reaktivität auch nach Lagerung sich nicht ändert.

### Beispiele 6 bis 10 (Initiator in der A-Komponente)

Allgemeine Zusammensetzung der Beispiele 6 bis 11 mit einem Mischungsverhältnis von 3:1:

| **A-Komponente** | **B-Komponente** |
|---|---|
| • Monomere | • Wasser |
| • Initiator | • Reduktionsmittel |
| • Inhibitor | • Kieselsäure |
| • Ligand | • Füllstoffe |
| • Kupfer(II)salz | |
| • Calcium-Aluminat- Zement | |
| • Kieselsäure | |
| • Füllstoffe | |

Für die Beispiele 6 bis 11 wurde eine A-Komponente mit folgender Zusammensetzung verwendet:

| | Gew.-% |
|---|---|
| Harzmischung I | 40,21 |
| Kupferbis(2-ethylhexanoat) | 0,15 |
| BiBEE | 0,17 |
| Tempol | 0,02 |
| Bipy | 0,04 |
| Cab-O-Sil® TS-720 | 2,50 |
| Secar 80 | 18,47 |
| Quarzsand F32 | 38,44 |

Die A-Komponente wurde hergestellt, indem das Kupferbis(2-ethylhexanoat), das Tempol, der Harzmischung, BiBEE und das Bipy in einer Speedmixer Dose über 1 Stunde bei 300 U/min gemischt wurden. Anschließend wurden nacheinander Cab-O-Sil® TS-720, Millisil W12 und dann Quarzsand F32 zugegeben und vor jeder Zugabe der Bestandteil von Hand gerührt. Abschließend wurde durch einen Dissolver über 8 Min. bei 2500 - 3000 U/min gemischt, die Mischung in Kartuschen abgefüllt und bei 25 °C gelagert.

Die jeweilige B-Komponente wurde hergestellt, indem vollentsalztes Wasser und das Reduktionsmittel in einer Dose durch einen Magnetrührer bei 300U/Min gerührt wurden, bis eine homogene Lösung erhalten wurde. Dann wurde bei den Beispielformulierungen 9 bis 11 Betolin V30 zugegeben. Anschließend wurden nacheinander Aerosil 200, Millisil W12 und dann Quarzsand F32 zugegeben und vor jeder Zugabe der Bestandteil von Hand gerührt. Abschließend wurde durch einen Dissolver über 8 Min. bei maximal 2500 U/min gemischt, die Mischung in Kartuschen abgefüllt und bei 25 °C gelagert.

### Beispiel 6

Für das Beispiel 6 wurde eine B-Komponente mit folgender Zusammensetzung verwendet:

| pH=4 | Gew.-% |
|---|---|
| 40%-ige Natriumbisulfitlösung | 2,76 |
| vollentsalztes Wasser | 35,90 |
| Aerosil A200 | 3,72 |
| Millisil W12 | 18,70 |
| Quarzsand F32 | 38,92 |

### Beispiel 7

Für das Beispiel 7 wurde eine B-Komponente mit folgender Zusammensetzung verwendet:

| | Gew.-% |
|---|---|
| 40-%ige Natriumbisulfitlösung | 5,33 |
| vollentsalztes Wasser | 34,72 |
| Aerosil A200 | 4,22 |
| Millisil W12 | 18,09 |
| Quarzsand F32 | 37,64 |

### Beispiel 8

Für das Beispiel 8 wurde eine B-Komponente mit folgender Zusammensetzung verwendet, wobei der pH-Wert mit einer NaOH-Lösung eingestellt wurde:

| pH=7 | Gew.-% |
|---|---|
| 40-%ige Natriumbisulfitlösung | 5,37 |
| vollentsalztes Wasser | 34,99 |
| Aerosil A200 | 3,47 |
| Millisil W12 | 18,23 |
| Quarzsand F32 | 37,94 |

### Beispiel 9

Für das Beispiel 9 wurde eine B-Komponente mit folgender Zusammensetzung verwendet, wobei der pH-Wert mit einer NaOH-Lösung eingestellt wurde:

| pH=7 | Gew.-% |
|---|---|
| 40-%ige Natriumbisulfitlösung + 1 % Xanthangum | 5,41 |
| vollentsalztes Wasser | 35,20 |
| Betolin V30 | 0,35 |
| Aerosil A200 | 2,54 |
| Millisil W12 | 18,34 |
| Quarzsand F32 | 38,16 |

### Beispiel 10 (Ascorbinsäure/Natriumascorbat (pH= 2; 3; 5; 7))

Für das Beispiel 10 wurde eine B-Komponente mit folgender Zusammensetzung verwendet, wobei pH-Werte von 2, 3 und 5 mit einer NaOH-Lösung eingestellt wurden und ein pH-Wert von 7 direkt mit Natriumascorbat hergestellt wurde.

| | *Gew.-%* |
|---|---|
| vollentsalztes Wasser | 38,85 |
| Ascorbinsäure | 0,46 |
| Betolin V30 | 0,39 |
| Aerosil A200 | 3,21 |
| Millisil W12 | 18,54 |
| Quarzsand F32 | 38,55 |

Die B-Komponente wurde hergestellt, indem vollentsalztes Wasser (20 mL zurückhalten) und Betolin V30 in einer Dose durch einen Magnetrührer über etwa 1,5 Stunden bei 300-500 U/Min gerührt wurden. Dann wurde eine Lösung aus 20 mL vollentsalztem Wasser und 2,86 g Ascorbinsäure zugegeben und deren pH-Wert mit einer Natronlösung eingestellt. Diese Lösung wurde zu einer Xanthangum-Lösung gegeben und über 5 min. bei 300 U/min gemischt. Anschließend wurden nacheinander Aerosil 200, Millisil W12 und dann Quarzsand F32 zugegeben und vor jeder Zugabe der Bestandteil von Hand gerührt. Abschließend wurde durch einen Dissolver über 8 Min. bei maximal 800 U/min gemischt, die Mischung in Kartuschen abgefüllt und bei 25 °C gelagert.

**Tabelle 2: Ergebnisse der Gelzeitmessungen der frisch hergestellten Zusammensetzungen und der Zusammensetzung aus Beispiel 10, bei der die Zusammensetzung auf verschiedene pH-Werte eingestellt wurde**

| **Beispiel** | **6** | **7** | **8** | **9** | **10** | | | |
|---|---|---|---|---|---|---|---|---|
| | | | | | pH=2 | pH=3 | pH=5 | pH=7 |
| **Gelzeit 25°C [min]** | 1,43 | 0,95 | 1,82 | 2,2 | 3,77 | 3,5 | 3,42 | 3,48 |
| Peakzeit [min] | 3,10 | 2,42 | 3,87 | 4,57 | 5,03 | 4,70 | 4,35 | 4,62 |
| Peaktemperatur [°C] | 74,47 | 78,47 | 73,05 | 67,47 | 77,43 | 76,67 | 79,84 | 77,95 |

Diese Ergebnisse zeigen, dass die Systeme mit dem Initiator in der A-Komponente ebenfalls schnell und gut aushärten (kurze Gelzeit, hohe Exothermie), und dass der pH-Wert (System 10) auf die Aushärtung keinen nennenswerten Einfluss hat.

### Beispiele 11 bis 15 (Reduktionsmittel in A-Komponente, Cu(II)-Salz in B-Komponente)

Allgemeine Zusammensetzung der Beispiele 12 bis 16 mit einem Mischungsverhältnis von 3:1:

| **A-Komponente** | **B-Komponente** |
|---|---|
| • Monomere | • Wasser |
| • Initiator | • Kupfer(II)salz |
| • Reduktionsmittel | • Kieselsäure |
| • Inhibitor | • Füllstoffe |
| • Ligand | |
| • Calcium-Aluminat- Zement | |
| • Kieselsäure | |
| • Füllstoffe | |

Für die Beispiele 11 bis 15 wurde eine A-Komponente mit folgender Zusammensetzung verwendet:
Die A-Komponente wurde hergestellt, indem das Reduktionsmittel, der Ligand, BiBEE, die Harzmischung, und das Tempol in einer Dose über 1 bis 3 Stunden bei 300 U/min gemischt wurden. Anschließend wurden nacheinander Cab-O-Sil TS-720, Secar 80 und dann Quarzsand F32 zugegeben und vor jeder Zugabe der Bestandteil von Hand gerührt. Abschließend wurde durch einen Dissolver über 8 Min. bei 3500 U/min gemischt, die Mischung in Kartuschen abgefüllt und bei 25 °C gelagert.

Die B-Komponente wurde hergestellt, indem vollentsalztes Wasser und das Kupfer(II)salz in einer Dose durch einen Magnetrührer über etwa 5 Minuten bei 300 U/Min gerührt wurden. Dann wurde gegebenenfalls das Betolin V30 über 3 bis 5 Stunden bei 300 U/min zugegeben. Anschließend wurden nacheinander Aerosil 200, Millisil W12 und dann Quarzsand F32 zugegeben und vor jeder Zugabe der Bestandteil von Hand gerührt. Abschließend wurde durch einen Dissolver über 8 Min. bei maximal 800 U/min gemischt, die Mischung in Kartuschen abgefüllt und bei 25 °C gelagert.

### Beispiel 11

Für das Beispiel 11 wurde eine A-Komponente und eine B-Komponente mit folgender Zusammensetzung verwendet:
A-Komponente:

| | Gew.-% |
|---|---|
| Harzmischung I | 40,11 |
| Tempol | 0,01 |
| Bipy | 0,03 |
| BiBEE | 0,17 |
| Sinn-octoat | 0,35 |
| Cab-O-Sil TS-720 | 2,49 |
| Secar 80 | 18,45 |
| Quarzsand F32 | 38,39 |

B-Komponente:

| | Gew.-% |
|---|---|
| vollentsalztes Wasser | 39,22 |
| Kupfer(II)sulfat, wasserfrei | 0,21 |
| Betolin V80 | 0,39 |
| Aerosil 200 | 2,53 |
| Millisil W12 | 18,71 |
| Quarzsand F32 | 38,94 |

### Beispiel 12

Für das Beispiel 12 wurde eine A-Komponente und eine B-Komponente mit folgender Zusammensetzung verwendet:
A-Komponente:

| | Gew.-% |
|---|---|
| Harzmischung I | 40,10 |
| PMEDTA | 0,04 |
| BiBEE | 0,17 |
| Sn-octoat | 0,35 |
| Cab-O-Sil® TS-720 | 2,49 |
| Secar 80 | 18,46 |
| Quarzsand F32 | 38,39 |

B-Komponente:

| | Gew.-% |
|---|---|
| vollentsalztes Wasser | 38,45 |
| Kupfer(II)sulfat, wasserfrei | 0,20 |
| Betolin V30 | 0,38 |
| Aerosil A200 | 4,45 |
| Millisil W12 | 18,35 |
| Quarzsand F32 | 38,17 |

### Beispiel 13

Für das Beispiel 13 wurde eine A-Komponente und eine B-Komponente mit folgender Zusammensetzung verwendet:
A-Komponente:

| | Gew.-% |
|---|---|
| Harzmischung I | 40,10 |
| Bipy | 0,04 |
| BiBEE | 0,17 |
| Sn-octoat | 0,36 |
| Cab-O-Sil TS-720 | 2,49 |
| Secar 80 | 18,45 |
| Quarzsand F32 | 38,39 |

B-Komponente:

| | Gew.-% |
|---|---|
| vollentsalztes Wasser | 39,19 |
| Kupfer(II)bromid | 0,29 |
| Betolin V30 | 0,39 |
| Aerosil A200 | 2,53 |
| Millisil W12 | 18,70 |
| Quarzsand F32 | 38,90 |

### Beispiel 14

Für das Beispiel 14 wurde eine A-Komponente und eine B-Komponente mit folgender Zusammensetzung verwendet:
A-Komponente:

| | Gew.-% |
|---|---|
| Harzmischung I | 40,10 |
| Bipy | 0,04 |
| BiBEE | 0,17 |
| Sn-octoat | 0,36 |
| Cab-O-Sil TS-720 | 2,49 |
| Secar 80 | 18,45 |
| Quarzsand F32 | 38,39 |

B-Komponente:

| | Gew.-% |
|---|---|
| vollentsalztes Wasser | 39,31 |
| Kupfer(II)bromid | 0,28 |
| Aerosil A200 | 3,53 |
| Millisil W12 | 18,57 |
| Quarzsand F32 | 38,65 |

### Beispiel 15

Für das Beispiel 15 wurde eine A-Komponente und eine B-Komponente mit folgender Zusammensetzung verwendet:
A-Komponente:

| | Gew.-% |
|---|---|
| Harzmischung I | 40,18 |
| Bipy | 0,04 |
| BiBEE | 0,02 |
| 5,6-Isopropyliden-L-ascorbinsäure | 0,19 |
| Cab-O-Sil TS-720 | 2,51 |
| Secar 80 | 18,49 |
| Quarzsand F32 | 38,57 |

B-Komponente:

| | Gew.-% |
|---|---|
| vollentsalztes Wasser | 39,19 |
| Kupfer(II)bromid | 0,29 |
| Betolin V30 | 0,39 |
| Aerosil A200 | 2,53 |
| Millisil W12 | 18,70 |
| Quarzsand F32 | 38,90 |

**Tabelle 3: Ergebnisse der Gelzeitmessungen der frisch hergestellten Zusammensetzungen und der Zusammensetzung aus Beispiel 11 nach drei Tagen Lagerung über den angegebenen Zeitraum**

| **Beispiel** | **11** | | **12** | **13** | **14** | **15** |
|---|---|---|---|---|---|---|
| | frisch | 3 Tage | frisch | frisch | frisch | frisch |
| **Gelzeit 25°C [min]** | 8,82 | 10,40 | 9,87 | 3,53 | 9,72 | 3,65 |
| Peakzeit [min] | 10,18 | 11,63 | 13,30 | 4,72 | 12,2 | 5,93 |
| Peaktemperatur [°C] | 78,05 | 76,27 | 68,93 | 76,36 | 71,86 | 73,92 |

Diese Ergebnisse zeigen, dass auch diese Systeme, bei welchem wasserlösliche Cu(II)-Salze in der B-Komponente und harzlösliche Reduktionsmittel in der A-Komponente verwendet werden, eine gute Aushärtung (kurze Gelzeit, ausgeprägte Exothermie) aufweisen.

### Beispiele 16 bis 19 (Ligand in B-Komponente)

Allgemeine Zusammensetzung der Beispiele 17 bis 19 mit einem Mischungsverhältnis von 3:1:

| **A-Komponente** | **B-Komponente** |
|---|---|
| • Monomere | • Wasser |
| • Initiator | • Kupfer(II)salz |
| • Reduktionsmittel | • Ligand |
| • Inhibitor | • Kieselsäure |
| • Calcium-Aluminat- Zement | • Füllstoffe |
| • Kieselsäure | |
| • Füllstoffe | |

### Beispiel 16

Für das Beispiel 16 wurde eine A-Komponente und eine B-Komponente mit folgender Zusammensetzung verwendet:
A-Komponente:

| | Gew.-% |
|---|---|
| Harzmischung I | 40,11 |
| Tempol | 0,02 |
| BiBEE | 0,17 |
| Sn-octoat | 0,35 |
| Cab-O-Sil TS-720 | 2,49 |
| Secar 80 | 18,45 |
| Quarzsand F32 | 38,40 |

B-Komponente:

| | Gew.-% |
|---|---|
| vollentsalztes Wasser | 38,73 |
| Kupfer(II)sulfat, wasserfrei | 0,20 |
| Bipy | 0,16 |
| Betolin | 0,58 |
| Aerosil A200 | 2,63 |
| Millisil W12 | 18,98 |
| Quarzsand F32 | 38,72 |

### Beispiel 17:

Für das Beispiel 17 wurde eine A-Komponente und eine B-Komponente mit folgender Zusammensetzung verwendet:
A-Komponente:

| | Gew.-% |
|---|---|
| Harzmischung I | 40,11 |
| BiBEE | 0,17 |
| Sn-octoat | 0,31 |
| Cab-O-Sil TS-720 | 2,49 |
| Secar 80 | 18,46 |
| Quarzsand F32 | 38,41 |

B-Komponente:

| | Gew.-% |
|---|---|
| vollentsalztes Wasser | 39,58 |
| Kupfer(II)sulfat, wasserfrei | 0,21 |
| PMEDTA | 0,12 |
| Aerosil A200 | 2,22 |
| Millisil W12 | 18,78 |
| Quarzsand F32 | 38,99 |

### Beispiel 18

Für das Beispiel 18 wurde eine A-Komponente und eine B-Komponente mit folgender Zusammensetzung verwendet:
A-Komponente:

| | Gew.-% |
|---|---|
| Harzmischung I | 40,12 |
| BiBEE | 0,17 |
| Sn-octoat | 0,35 |
| Cab-O-Sil TS-720 | 2,49 |
| Secar 80 | 18,46 |
| Quarzsand F32 | 38,41 |

B-Komponente:

| | Gew.-% |
|---|---|
| vollentsalztes Wasser | 39,02 |
| Kupfer(II)bromid | 0,27 |
| PMEDTA | 0,13 |
| Aerosil A200 | 3,22 |
| Millisil W12 | 18,63 |
| Quarzsand F32 | 38,74 |

### Beispiel 19 (wasserlösliches Monomer in B ersetzt einen Teil des Wassers)

Für das Beispiel 20 wurde eine A-Komponente und eine B-Komponente mit folgender Zusammensetzung verwendet:
A-Komponente:

| | Gew.-% |
|---|---|
| UMA Präpolymer II | 20,62 |
| HPMA | 6,19 |
| 1,4-BDDMA | 13,40 |
| Kupfer(II)-2-ethylhexanoat | 0,15 |
| BiBEE | 0,17 |
| Bipy | 0,04 |
| TEMPOL | 0,04 |
| Cab-O-Sil TS-720 | 2,50 |
| Secar 80 | 18,45 |
| Quarzsand F32 | 38,44 |

B-Komponente:

| | Gew.-% |
|---|---|
| vollentsalztes Wasser | 19,40 |
| L-Ascorbinsäure | 0,47 |
| MPEG-350-methacrylat | 19,41 |
| Ultragel 300 | 0,40 |
| Aerosil 200 | 3,00 |
| Millisil W12 | 19,10 |
| Quarzsand F32 | 38,22 |

**Tabelle 4: Ergebnisse der Gelzeitmessungen nach 2 Tagen Lagerung der Zusammensetzung**

| **Beispiel** | **16** | **17** | **18** | **19** |
|---|---|---|---|---|
| **Gelzeit 25°C [min]** | 18,17 | 10 | 10,57 | 4,5 |
| Peakzeit [min] | 19,60 | 12,80 | 13,08 | 5,5 |
| Peaktemperatur [°C] | 77,18 | 75,64 | 70,29 | 87 |

Diese Ergebnisse zeigen, dass der Ligand durchaus auch in der B-Komponente gelagert werden kann, und dass bei Bedarf ein Teil des Wassers durch wasserlösliche Monomere (welche gleichzeitig bei Bedarf als Tensid wirken könnten) ausgetauscht werden kann.

### Bestimmung derAuszugsfestigkeit

Jeweils 3 Ankerstangen M12x72, werden in Beton C20/25 in trockene und gereinigte Bohrlöcher mit 14 mm Durchmesser gesetzt und nach 24 h Aushärtung bis zum Versagen ausgezogen (zentrischer Zug) und die folgenden Lastwerte bei den in der Tabelle 5 angegebenen Prüftemperaturen bestimmt (Mittelwerte von 3 Messungen).

### Bestimmung der inneren Festigkeit

Der Auszugsversuch wird wie bei der Bestimmung der Auszugsfestigkeit durchgeführt, jedoch verwendet man Stahlhülsen mit einer profilierten Bohrung, welche das Bohrloch simuliert. Man setzt 5 Hülsen mit Ankerstangen M8x100 und führt mittels einer Zwick-Zugprüfmaschine einen Zugversuch bis zum Versagen des Ankers durch. Durch diese Versuchsführung wird der Einfluss der Beton-Bohrlochwand auf den Mörtel ausgeschlossen.

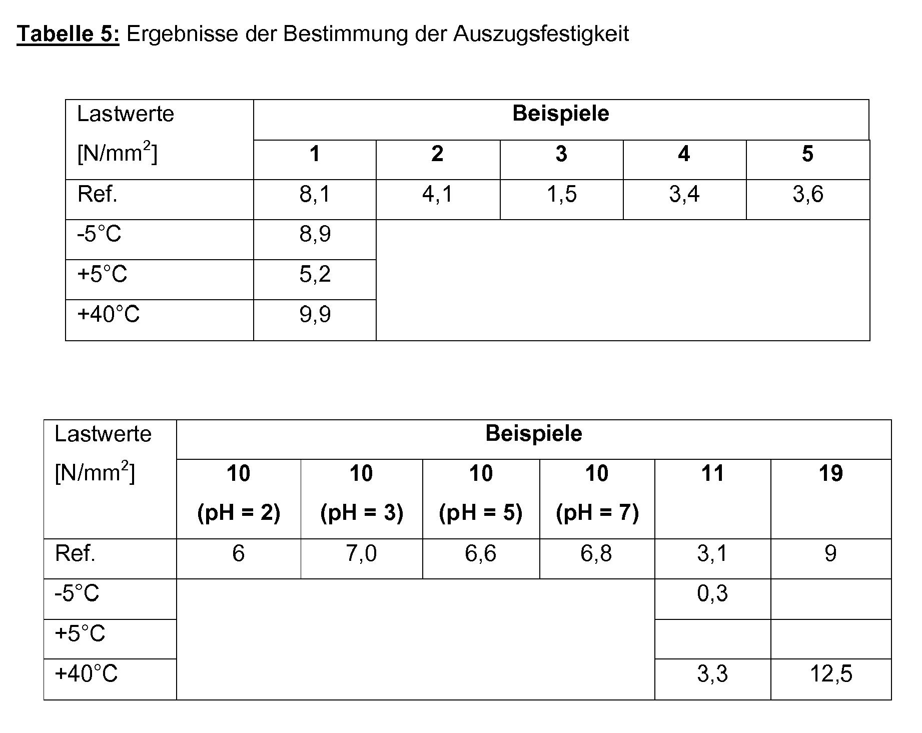

**Tabelle 6: Ergebnisse der Bestimmung der inneren Festigkeit**

| | **Beispiel 1** | **Beispiel 2** |
|---|---|---|
| innere Festigkeit σ [N/mm²] | 10,65 | 6,11 |

Die Ergebnisse zeigen, dass mit den Zusammensetzungen nennenswerte Versagenslastwerte erreicht werden können, so dass die Zusammensetzungen die prinzipielle Eignung als Chemischer Anker haben.

## Patentansprüche

1. Reaktionsharz-Zusammensetzung mit
- einer radikalisch polymerisierbaren Verbindung,
- einem Initiatorsystem, das
o einen α-Halogencarbonsäureester und
o ein Katalysatorsystem, welches
▪ ein Kupfer(II)salz
▪ ein Reduktionsmittel und
▪ wenigstens einen Stickstoff-enthaltenden Liganden
umfasst,
enthält,
- einer hydraulisch abbindenden und/oder polykondensierbaren Verbindung und
- Wasser.

2. Reaktionsharz-Zusammensetzung nach Anspruch 1, wobei das Reduktionsmittel aus der Gruppe bestehend aus Ascorbinsäure und deren Salzen oder Derivaten, reduzierend wirkenden Sacchariden, Zinn(II)-Carboxylaten, Hydroxylaminen, phenolischen Reduktionsmitteln, Catecholen, Hydroxylaminen und Kombinationen davon ausgewählt ist.

3. Reaktionsharz-Zusammensetzung nach Anspruch 1 oder 2, wobei der α-Halogencarbonsäureester ganz oder teilweise in Wasser löslich oder emulgierbar ist.

4. Reaktionsharz-Zusammensetzung nach einem der vorhergehenden Ansprüche, wobei der α-Halogensäureester unter Verbindungen der allgemeinen Formel (I) ausgewählt ist: 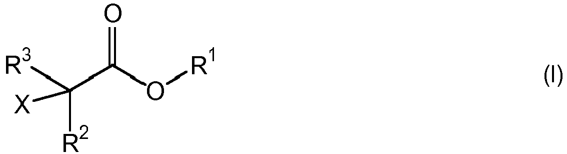 in der
X Chlor, Brom oder Iod, bevorzugt Chlor oder Brom, besonders bevorzugt Brom bedeutet;
R¹ für eine geradkettige oder verzweigte, gegebenenfalls substituierte C₁-C₂₀-Alkylgruppe, eine Polyalkylenoxidgruppe oder eine Arylgruppe steht; oder
für den Rest eines acylierten, verzweigten, dreiwertigen Alkohols, den Rest eines vollständig oder partiell acylierten, linearen oder verzweigten, vierwertigen Alkohols, den Rest eines vollständig oder partiell acylierten, linearen fünf-oder sechswertigen Alkohols, den Rest einer vollständig oder partiell acylierten, linearen oder cyclischen C₄-C₆-Aldose oder C₄-C₆-Ketose oder den Rest eines vollständig oder partiell acylierten Disaccharids steht, und Isomere dieser Verbindungen;
R² und R³ unabhängig voneinander für Wasserstoff, eine C₁-C₂₀-Alkylgruppe, eine C₃-C₈-Cycloalkylgruppe, C₂-C₂₀-Alkenyl- oder -Alkinylgruppe, Oxiranylgruppe, Glycidylgruppe, Arylgruppe, Heterocyclylgruppe, Aralkylgruppe oder Aralkenylgruppe stehen.

5. Reaktionsharz-Zusammensetzung nach Anspruch 4, wobei das Kupfer(II)salz aus der Gruppe ausgewählt ist, die aus Cu(II)(PF₆)₂, CuX₂, mit X = Cl, Br, I, Cu(OTf)₂ und Cu(II)-Carboxylaten besteht.

6. Reaktionsharz-Zusammensetzung nach einem der vorhergehenden Ansprüche, wobei der Stickstoff-enthaltende Ligand zwei oder mehr Stickstoffatome enthält und mit Kupfer(I) einen Chelatkomplex bilden kann.

7. Reaktionsharz-Zusammensetzung nach Anspruch 6, wobei der Stickstoff-enthaltende Ligand unter Aminoverbindungen mit mindestens zwei primären, sekundären und/oder tertiären Aminogruppen oder Aminoverbindungen mit mindestens zwei heterocyclischen Stickstoffatomen ausgewählt ist.

8. Reaktionsharz-Zusammensetzung nach einem der vorhergehenden Ansprüche, wobei die radikalisch polymerisierbare Verbindung ein ungesättigtes Polyesterharz, ein Vinylesterharz und/oder ein Vinylester-Urethanharz ist.

9. Reaktionsharz-Zusammensetzung nach einem der vorhergehenden Ansprüche, wobei die radikalisch polymerisierbare Verbindung ein (Meth)acrylat-funktionalisiertes Harz ist und der α-Halogencarbonsäureester ein α-Halogencarbonsäureester der Isobutansäure oder Propansäure ist.

10. Reaktionsharz-Zusammensetzung nach einem der vorhergehenden Ansprüche, wobei die hydraulisch abbindende Verbindung unter Zement und/oder Gips ausgewählt ist.

11. Reaktionsharz-Zusammensetzung nach einem der vorhergehenden Ansprüche, wobei die polykondensierbare Verbindung unter silikatischen, polykondensierbaren Verbindungen ausgewählt ist.

12. Reaktionsharz-Zusammensetzung nach einem der vorhergehenden Ansprüche, wobei die Zusammensetzung ferner mindestens einen weiteren Bestandteil enthält, der aus der Gruppe ausgewählt ist, die aus Inhibitoren, Additiven und Füllstoffen besteht.

13. Reaktionsharz-Zusammensetzung nach einem der vorhergehenden Ansprüche, wobei das Kupfer(II)salz reaktionsinhibierend von dem Reduktionsmittel getrennt ist und das Wasser reaktionsinhibierend von der hydraulisch abbindenden und/oder polykondensierbaren Verbindung getrennt ist.

14. Reaktionsharz-Zusammensetzung nach Anspruch 13, wobei ferner das Kupfer(II)salz reaktionsinhibierend von dem α-Halogencarbonsäureester getrennt ist.

15. Zwei- oder Mehrkomponenten-System umfassend eine Reaktionsharz-Zusammensetzung nach einem der Ansprüche 1 bis 12.

16. Zwei- oder Mehrkomponenten-System nach Anspruch 15, wobei das Kupfer(II)salz reaktionsinhibierend von dem Reduktionsmittel getrennt ist und das Wasser reaktionsinhibierend von der hydraulisch abbindenden und/oder polykondensierbaren Verbindung getrennt ist.

17. Zwei- oder Mehrkomponenten-System nach Anspruch 16, wobei das Kupfer(II)salz ferner reaktionsinhibierend von dem α-Halogencarbonsäureester getrennt ist.

18. Zweikomponenten-System nach Anspruch 16 oder 17, wobei in einer ersten Komponente die radikalisch polymerisierbare Verbindung und die hydraulisch abbindende und/oder polykondensierbare Verbindung und in einer zweiten Komponente das Wasser enthalten sind und das Kupfer(II)salz in der ersten und das Reduktionsmittel in der zweiten oder das Kupfer(II)salz in der zweiten und das Reduktionsmittel in der ersten Komponente enthalten sind.

19. Zweikomponenten-System nach Anspruch 18, wobei der Ligand und der Initiator jeweils unabhängig voneinander in einer Komponente oder aufgeteilt auf beide Komponenten enthalten sind.

20. Verwendung einer Reaktionsharz-zusammensetzung nach einem der Ansprüche 1 bis 14 oder eines Zwei-oder Mehrkomponenten-Systems nach einem der Ansprüche 15 bis 19 für bauliche Zwecke.
